# EUROPEAN PATENT APPLICATION

(11) **EP 4 358 576 A1**
(43) Date of publication of application: **24.04.2024**
(21) Application number: 22862767.5
(22) Date of filing: 31.05.2022
(51) Int. Cl.: H04W 28/00

(54) **SERVICE QUALITY PROCESSING METHOD AND APPARATUS, AND COMMUNICATION SYSTEM**

(30) Priority: 31.08.2021 CN 202111014087
(71) Applicant: Huawei Technologies Co., Ltd., Shenzhen, Guangdong 518129 (CN)
(72) Inventor: SUN, Haiyang, Shenzhen, Guangdong 518129 (CN)
(74) Representative: Pfenning, Meinig & Partner mbB
(86) International application number: PCT/CN2022/096194
(87) International publication number: WO 2023/029625

(57) **Abstract**

A quality of service processing method and apparatus and a communication system are provided. The method includes: A session management network element receives a first rule from a policy control network element, where the first rule includes direction information and quality of service notification control information, the direction information indicates a direction of a first service flow, and the quality of service notification control information indicates to send notification information to the policy control network element when quality of service of the first service flow meets a preset reporting condition. The session management network element sends the direction information and the quality of service notification control information to an access network device. The session management network element receives quality of service notification information in a first direction from the access network device. The session management network element sends the first direction and information about the first service flow to the policy control network element. According to the method, quality of service of a service flow can meet corresponding target quality of service, and signaling interaction in a quality of service processing process is reduced.

## Description

### CROSS-REFERENCE TO RELATED APPLICATIONS

This application claims priority to Chinese Patent Application No. 202111014087.4, filed with the China National Intellectual Property Administration on August 31, 2021 and entitled "QUALITY OF SERVICE PROCESSING METHOD AND APPARATUS AND COMMUNICATION SYSTEM", which is incorporated herein by reference in its entirety.

### TECHNICAL FIELD

This application relates to the field of communication technologies, and in particular, to a quality of service processing method and apparatus and a communication system.

### BACKGROUND

In a 5th generation mobile communication system, a service flow-based quality of service model is used to ensure end-to-end quality of service of a service. The quality of service may be ensured by using notification control information. For example, after receiving the notification control information, an access network device detects a service flow. If the access network device finds that quality of service of the service flow cannot meet target quality of service, the access network device sends notification information to a session management function network element, where the notification information notifies the session management function network element that the service flow cannot meet the target quality of service, so that the session management function network element initiates a specific processing procedure to a policy control function network element, where the processing procedure is for updating a quality of service parameter of the service flow. In this way, finally, the access network device may use an updated service flow, to ensure the end-to-end quality of service of the service.

However, if the current quality of service of the service flow cannot be met, the update of the quality of service parameter of the service flow depends on re-execution of the foregoing procedure. Therefore, the foregoing method is inefficient and causes an increase in exchanged signaling.

### SUMMARY

A quality of service processing method and apparatus and a communication system are provided. According to the method, quality of service of a service flow can be accurately processed, so that the quality of service of the service flow can meet corresponding target quality of service.

According to a first aspect, an embodiment of this application provides a first quality of service processing method. The method may be performed by a session management network element, or may be performed by a chip in the session management network element. This is not limited. Specifically, the following steps are included. A session management network element receives a first rule from a policy control network element, where the first rule includes direction information and quality of service notification control information, the direction information indicates a direction of a first service flow, the direction information includes an uplink direction and/or a downlink direction, and the quality of service notification control information indicates to send notification information to the policy control network element when quality of service of the first service flow meets a preset reporting condition. The session management network element sends the direction information and the notification control information to an access network device. The session management network element receives quality of service notification information in a first direction from the access network device, where the quality of service notification information in the first direction notifies that the quality of service of the first service flow in the first direction meets the preset reporting condition, and the first direction includes at least one direction in the direction information. The session management network element sends the first direction and information about the first service flow to the policy control network element.

The session management network element receives the first rule from the policy control network element, and sends, to the access network device, the direction information and the quality of service notification control information that are included in the first rule, where the quality of service notification control information indicates to send the notification information to the policy control network element when the quality of service of the first service flow meets the preset reporting condition. When the access network device detects that the quality of service of the first service flow in the first direction meets the preset reporting condition, the access network device sends the quality of service notification information in the first direction to the session management network element. After receiving the quality of service notification information in the first direction, the session management network element sends the first direction and the information about the first service flow to the policy control network element, so that the policy control network element can accurately process the quality of service of the first service flow in the first direction, to ensure that the quality of service of the first service flow in the first direction can meet first target quality of service. In addition, the direction information is carried in information transmitted in a quality of service processing process, and no additional interaction of transmission of the direction information is required, thereby reducing additional overheads in the quality of service processing process.

In a possible implementation, the preset reporting condition includes: Current quality of service of the service flow does not meet or meets target quality of service in a corresponding direction. For example, meeting the target quality of service of the first service flow may be re-meeting the target quality of service of the first service flow. To be specific, a status of the first service flow changes from not meeting the target quality of service of the first service flow to meeting the target quality of service of the first service flow.

In this implementation, a condition that is of the current quality of service of the service flow and that needs to be met for reporting the notification information to the policy control network element is determined, so that the current quality of service of the service flow can be effectively updated.

In a possible implementation, before the session management network element sends the direction information and the quality of service notification control information to an access network device, the method further includes: The session management network element binds the first rule to the first service flow.

In this implementation, before sending the direction information and the quality of service notification control information to the access network device, the session management network element binds the first rule to the first service flow, so that the direction information sent by the session management network element to the access network device is consistent with the direction of the first service flow. When determining that the first service flow in the first direction does not meet or re-meets the first target quality of service, the access network device sends the quality of service notification information in the first direction to the session management network element, and does not need to send the direction information to the session management network element, thereby reducing additional overheads of information transmission. It should be understood that the binding step is an optional step, and the session management network element may perform the binding or may not perform the binding according to an actual requirement. This is not specifically limited in this application.

In a possible implementation, that the session management network element binds the first rule to the first service flow includes: When the first service flow is a currently existing service flow, the session management network element determines that direction information of the first service flow is the same as the direction information in the first rule, and quality of service notification control information of the first service flow is the same as the quality of service notification control information in the first rule. The session management network element binds the first rule to the first service flow, where the bound first rule corresponds to the first service flow.

In this implementation, when the session management network element determines that the first service flow currently exists, the direction information of the first service flow is consistent with the direction information in the first rule, and the quality of service notification control information of the first service flow is also the same as the quality of service notification control information in the first rule, the session management network element may accurately bind the first rule to the first service flow, so that the bound first rule corresponds to the first service flow. Therefore, when receiving the quality of service notification information sent by the access network device, the session management network element may determine the direction information corresponding to the quality of service notification information by itself, thereby reducing additional overheads caused by transmission of the direction information.

It should be noted that, when the session management network element accurately binds the first rule to the first service flow, it further needs to be ensured that another parameter of the first service flow is also the same as a corresponding parameter of the first rule.

In a possible implementation, that the session management network element binds the first rule to the service flow includes: The session management network element creates the first service flow, where direction information of the first service flow is the same as the direction information in the first rule, and quality of service notification control information of the first service flow is the same as the quality of service notification control information in the first rule. The session management network element binds the first rule to the first service flow, where the bound first rule corresponds to the first service flow.

In this implementation, when determining that the first service flow does not exist currently, the session management network element may create the first service flow, where the direction information of the created first service flow is consistent with the direction information in the first rule, and the quality of service notification control information of the first service flow is also the same as the quality of service notification control information in the first rule. Then, the session management network element binds the created first service flow to the first rule, so that the created first service flow corresponds to the first rule. Therefore, when receiving the quality of service notification information sent by the access network device, the session management network element may determine the direction information corresponding to the quality of service notification information by itself, thereby reducing additional overheads caused by transmission of the direction information.

In a possible implementation, the method further includes: The session management network element sends a first message to the access network device, where the first message includes identification information of the first service flow and the direction corresponding to the first service flow.

In this implementation, after creating the first service flow, the session management network element needs to notify the access network device of the identification information and the direction information of the first service flow. When detecting the quality of service of the first service flow, the access network device may accurately know the information about the first service flow. In this way, scheduling and quality of service assurance are performed on the service flow.

In a possible implementation, the quality of service notification information in the first direction includes the first direction and the information about the first service flow.

In this implementation, before the session management network element sends the direction information and the quality of service notification control information to the access network device, if the session management network element does not bind the first rule to the first service flow, when the access network device determines that quality of service of a service flow in the first direction does not meet or re-meets the first target quality of service, the quality of service notification information sent to the session management network element includes the information about the first service flow, and further needs to include the first direction. Only in this way can ensure that the session management network element may learn the direction corresponding to the information about the first service flow after receiving the quality of service notification information in the first direction.

In a possible implementation, the method further includes: The session management network element receives a second rule from the policy control network element, where the second rule includes the first direction and a second quality of service parameter of the service flow in the first direction, and the second quality of service parameter indicates updated quality of service of the service flow in the first direction.

The session management network element sends the first direction and the second quality of service parameter to the access network device.

In this implementation, the session management network element receives the second rule from the policy control network element, where the second rule includes the first direction and an updated quality of service parameter of the service flow in the first direction, that is, the second quality of service parameter. Further, the session management network element sends the first direction and the updated quality of service parameter of the service flow in the first direction to the access network device, to ensure that the updated quality of service that is of the service flow in the first direction and that is used by a communication network can meet the first target quality of service.

In a possible implementation, the method further includes: The session management network element sends the first direction and the second quality of service parameter of the service flow in the first direction to a terminal device.

In this implementation, the session management network element further needs to send the first direction and the updated quality of service parameter of the service flow in the first direction to the terminal device, to ensure that the updated quality of service that is of the service flow in the first direction and that is used by the communication network can meet the target quality of service in the direction.

In a possible implementation, after the session management network element receives a second rule from the policy control network element, the method further includes: The session management network element binds the second rule to a second service flow.

In this implementation, after receiving the second rule from the policy control network element, the session management network element may bind the second rule to the second service flow, so that the second rule corresponds to the second service flow. It should be understood that the binding step is an optional step, and the session management network element may perform the binding or may not perform the binding according to an actual requirement. This is not limited in this application.

In a possible implementation, that the session management network element binds the second rule to a second service flow includes: When the second service flow is a currently existing service flow, the session management network element determines that a direction of the second service flow is the first direction, and a quality of service parameter of the second service flow is the same as the second quality of service parameter in the second rule. The session management network element binds the second rule to the second service flow, where the bound second rule corresponds to the second service flow.

In this implementation, when the session management network element determines that the second service flow currently exists, direction information of the second service flow is consistent with direction information in the second rule, and the quality of service parameter of the second service flow is also the same as the second quality of service parameter in the second rule, the session management network element may accurately bind the second rule to the second service flow, so that the bound second rule corresponds to the second service flow.

It should be noted that, when the session management network element accurately binds the second rule to the second service flow, it further needs to be ensured that another parameter of the second service flow is also the same as a corresponding parameter of the second rule.

In a possible implementation, that the session management network element binds the second rule to a second service flow includes: The session management network element creates the second service flow, where a direction of the second service flow is the first direction, and a quality of service parameter of the second service flow is the same as the second quality of service parameter in the second rule. The session management network element binds the second rule to the second service flow, where the bound second rule corresponds to the second service flow.

In this implementation, when determining that the second service flow does not exist currently, the session management network element may create the second service flow, where direction information of the created second service flow is consistent with the direction information in the second rule, and the quality of service parameter of the second service flow is also the same as the second quality of service parameter in the second rule. Then, the session management network element binds the created second service flow to the second rule, so that the created second service flow corresponds to the second rule.

It should be noted that, when the session management network element accurately binds the second rule to the created second service flow, it further needs to be ensured that another parameter of the created second service flow is also the same as a corresponding parameter of the second rule.

In a possible implementation, the method further includes: The session management network element sends a second message to the access network device, where the second message includes identification information of the second service flow and the direction corresponding to the second service flow.

In this implementation, after creating the second service flow, the session management network element needs to notify the access network device of the identification information and the direction information of the second service flow, so that when using the second service flow, the access network device can also determine information about the second service flow.

In a possible implementation, the quality of service parameter includes one or more of the following: a priority level, a packet delay budget, a maximum data burst volume, a quality of service identifier, and notification control information.

In this implementation, in this solution, quality of service may be flexibly adjusted based on quality of service parameters of different service flows according to an actual requirement, so that the quality of service of the service flow used for network transmission meets the actual requirement.

According to a second aspect, an embodiment of this application provides another quality of service processing method. The method may be performed by an access network device, or may be performed by a chip in the access network device. This is not limited. Specifically, the following steps are included. An access network device receives a quality of service parameter set of a service flow in a first direction from a session management network element, where the first direction includes an uplink direction and/or a downlink direction. The access network device receives a first service flow in the first direction. The access network device determines that a first quality of service parameter of the first service flow does not meet a target quality of service parameter in the direction. The access network device selects a second quality of service parameter of the first service flow from the quality of service parameter set, where the second quality of service parameter is an updated quality of service parameter of the first service flow.

The access network device receives the quality of service parameter set of the service flow in the first direction from the session management network element. When receiving the first service flow in the first direction, and determining that the quality of service parameter of the first service flow does not meet the target quality of service parameter in the first direction, the access network device may select the second quality of service parameter from the quality of service parameter set as the updated quality of service parameter of the first service flow in the first direction. In the method, when detecting that a service flow in a direction does not meet target quality of service of the service flow in the direction, the access network device may update a quality of service parameter of the service flow in the direction by itself, so that quality of service of the service flow in the direction meets a target requirement, and system overheads for processing the quality of service in the direction are reduced.

In a possible implementation, one or more quality of service parameters in the quality of service parameter set have priority levels.

In this implementation, the one or more quality of service parameters in the quality of service parameter set have the priority levels, so that when determining that the service flow in the first direction does not meet the target quality of service, the access network device can select a new quality of service parameter based on the priority level of the quality of service parameter, to ensure that the quality of service of the first service flow in the first direction meets the target quality of service.

In a possible implementation, that the access network device selects a second quality of service parameter of the first service flow from the quality of service parameter set includes: The access network device selects, from the quality of service parameter set, a quality of service parameter with a highest priority level as the second quality of service parameter; or the access network device selects, from the quality of service parameter set, one or more quality of service parameters whose priority levels are lower than that of the first quality of service parameter, and uses a quality of service parameter with a highest priority level in the one or more quality of service parameters as the second quality of service parameter.

In this implementation, when determining that the first service flow in the first direction does not meet the target quality of service in the direction, the access network device first selects, from the quality of service parameter set of the first service flow, a quality of service parameter set whose direction is consistent with that of the first service flow, and then the access network device may use a quality of service parameter with a highest priority level in the quality of service parameter set as an updated quality of service parameter of the first service flow; or the access network device may select, from the quality of service parameter set, one or more quality of service parameters whose priority levels are lower than that of the first quality of service parameter, and use a quality of service parameter with a highest priority level in the one or more quality of service parameters as an updated quality of service parameter of the first service flow. In the method, the quality of service parameter of the first service flow in the first direction can be effectively updated, so that the quality of service of the first service flow meets the corresponding target quality of service.

In a possible implementation, the access network device sends the first direction and the second quality of service parameter of the first service flow in the first direction to the session management network element.

In this implementation, after re-selecting the quality of service parameter of the first service flow in the first direction, the access network device further sends the first direction and the second quality of service parameter to the session management network element, so that a network side knows the updated quality of service parameter of the first service flow in the first direction, and it is also ensured that quality of service of the network meets a target requirement.

In a possible implementation, the quality of service parameter includes one or more of the following: the priority level, a packet delay budget, a maximum data burst volume, a quality of service identifier, and notification control information.

In this implementation, the access network device may flexibly adjust a current quality of service parameter of the service flow based on different current quality of service parameters of the service flow according to an actual requirement, so that current quality of service of the service flow meets the actual requirement.

According to a third aspect, an embodiment of this application provides another quality of service processing method. The method belongs to a system method, and may be performed by a session management network element and an access network device, or may be performed by a chip in the session management network element and a chip in the access network device. This is not limited. Specifically, the following steps are included. A session management network element receives a quality of service parameter set of a service flow in a first direction from a policy control network element, where the first direction includes an uplink direction and/or a downlink direction. The session management network element sends the quality of service parameter set to an access network device. The access network device receives a first service flow in the first direction. The access network device determines that a first quality of service parameter of the first service flow does not meet a target quality of service parameter in the direction. The access network device selects a second quality of service parameter of the first service flow from the quality of service parameter set, where the second quality of service parameter is an updated quality of service parameter of the first service flow.

The session management network element receives the quality of service parameter set of the service flow in the first direction from the policy control network element, and sends the quality of service parameter set to the access network device. When receiving the first service flow in the first direction, and determining that the quality of service parameter of the first service flow in the first direction does not meet the target quality of service parameter of the first service flow, the access network device may select the second quality of service parameter from the quality of service parameter set as the updated quality of service parameter of the first service flow. Therefore, in the method, when detecting that quality of service of a service flow in a direction does not meet target quality of service in the direction, the access network device may update a quality of service parameter of the service flow in the direction by itself, so that the quality of service of the service flow in the direction meets a target requirement, and system overheads for processing the quality of service in the direction are also reduced.

In a possible implementation, one or more quality of service parameters in the quality of service parameter set have priority levels.

In this implementation, each quality of service parameter in the quality of service parameter set has a priority level, so that when determining that a service flow in a direction does not meet target quality of service of the service flow in the direction, the access network device can effectively select, from the quality of service parameter set based on the priority level of the quality of service parameter, a new quality of service parameter for a quality of service parameter of the service flow in the direction, to ensure that quality of service of the service flow in the direction meets the target quality of service.

In a possible implementation, that the access network device selects a second quality of service parameter of the first service flow from the quality of service parameter set includes: The access network device selects, from the quality of service parameter set, a quality of service parameter with a highest priority level as the second quality of service parameter; or the access network device selects, from the quality of service parameter set, one or more quality of service parameters whose priority levels are lower than that of the first quality of service parameter, and uses a quality of service parameter with a highest priority level in the one or more quality of service parameters as the second quality of service parameter.

In this implementation, when determining that the first service flow in the first direction does not meet the target quality of service in the direction, the access network device first selects, from the quality of service parameter set of the service flow in the first direction, a quality of service parameter set whose direction is consistent with that of the first service flow, and then the access network device may use a quality of service parameter with a highest priority level in the quality of service parameter set as an updated quality of service parameter of the first service flow; or the access network device may select, from the quality of service parameter set, one or more quality of service parameters whose priority levels are lower than that of the first quality of service parameter, and use a quality of service parameter with a highest priority level as an updated quality of service parameter of the first service flow. Therefore, the access network device may effectively update the quality of service parameter of the first service flow in the first direction, so that the quality of service of the first service flow in the first direction meets the corresponding target quality of service.

In a possible implementation, the method further includes: The session management network element receives the first direction and the second quality of service parameter of the first service flow in the first direction from the access network device.

In this implementation, after the access network device re-selects the quality of service parameter of the first service flow in the first direction, the session management network element receives the first direction and the second quality of service parameter from the access network device, so that a network side knows the updated quality of service parameter of the first service flow in the first direction, and it is ensured that quality of service of the network meets a target requirement.

In a possible implementation, the quality of service parameter includes one or more of the following: the priority level, a packet delay budget, a maximum data burst volume, a quality of service identifier, and notification control information.

In this implementation, the access network device may flexibly adjust a current quality of service parameter of the service flow based on different current quality of service parameters of the service flow according to an actual requirement, so that current quality of service of the service flow meets the actual requirement.

According to a fourth aspect, an embodiment of this application provides another quality of service processing method. The method may be performed by an access network device, or may be performed by a chip in the access network device. This is not limited. Specifically, the following steps are included. An access network device receives direction information and quality of service notification control information from a session management network element. The access network device determines that quality of service of a first service flow in a first direction meets a preset reporting condition, and the access network device sends quality of service notification information in the first direction to the session management network element.

In this implementation, the access network device receives, from the session management network element, the direction information and the quality of service notification control information that are delivered by a policy control network element, so that when detecting that the quality of service of the first service flow in the first direction does not meet first target quality of service or re-meets first target quality of service, the access network device reports the quality of service notification information in the first direction via the session management network element. In this way, the policy control network element may process the service flow in the direction, to ensure that quality of service of a communication network meets an actual target requirement.

According to a fifth aspect, an embodiment of this application provides a quality of service processing apparatus. The apparatus may be used in a session management network element, and has a function of implementing any one of the first aspect or the possible implementations of the first aspect. Alternatively, the apparatus may be used in an access network device, and has a function of implementing the method according to any one of the second aspect or the possible designs of the second aspect, or has a function of implementing the method according to the fourth aspect. Hardware or software includes one or more units corresponding to the foregoing functions, for example, includes a receiving unit, a processing unit, and a sending unit.

According to a sixth aspect, this application further provides a quality of service processing apparatus. The apparatus may be used in a session management network element, and has a function of implementing any one of the first aspect or the possible implementations of the first aspect. Alternatively, the apparatus may be used in an access network device, and has a function of implementing the method according to any one of the second aspect or the possible designs of the second aspect, or has a function of implementing the method according to the fourth aspect. The apparatus may include a receiving module, a processing module, and a sending module.

According to a seventh aspect, this application further provides a communication system. The system includes a session management network element configured to perform the method provided in the first aspect and a policy control network element. The policy control network element is configured to send a first rule to the session management network element, where the first rule includes direction information and quality of service notification control information, the direction information indicates a direction of a first service flow, the direction information includes an uplink direction and/or a downlink direction, and the quality of service notification control information indicates to send notification information to the policy control network element when quality of service of the first service flow meets a preset reporting condition. The policy control network element is further configured to receive a first direction and information about the first service flow from the session management network element.

A possible system is provided. The system further includes an access network device, and the access network device is configured to perform the method provided in the fourth aspect.

According to an eighth aspect, this application further provides a communication system. The system includes an access network device configured to perform the method provided in the second aspect, a policy control network element, and a session management network element. The policy control network element is configured to send a first rule to the session management network element, where the first rule includes a first direction and a quality of service parameter set of a service flow in the first direction, and the first direction includes an uplink direction and/or a downlink direction. The session management network element is configured to receive the first rule from the policy control network element. The session management network element is configured to send the quality of service parameter set of the service flow in the first direction to the access network device.

According to a ninth aspect, an embodiment of this application further provides a computer storage medium. The storage medium stores a software program. When the software program is read and executed by one or more processors, the method provided in any one of the first aspect or the possible implementations of the first aspect may be implemented, or the method provided in any one of the second aspect or the possible implementations of the second aspect may be implemented. Alternatively, when the software program is read and executed by one or more processors, the method provided in any one of the third aspect or the possible implementations of the third aspect may be implemented, or the method provided in the implementation of the fourth aspect may be implemented.

According to a tenth aspect, an embodiment of this application further provides a computer program product including instructions. When the computer program product runs on a computer, the method provided in any one of the first aspect or the possible implementations of the first aspect is performed, or the method provided in any one of the second aspect or the possible implementations of the second aspect is performed. Alternatively, when the computer program product runs on a computer, the method provided in any one of the third aspect or the possible implementations of the third aspect is performed, or the method provided in the fourth aspect is performed.

According to an eleventh aspect, an embodiment of this application further provides a chip system. The chip system includes a processor, configured to support a session management network element in implementing the function in the first aspect, configured to support an access network device in implementing the function in the second aspect, or configured to support a session management network element or an access network device in implementing the function in the third aspect.

In a possible design, the chip system further includes a memory. The memory is configured to store and load necessary program instructions and data that are executed by an apparatus. The chip system may include a chip, or may include a chip and another discrete device.

### BRIEF DESCRIPTION OF DRAWINGS

FIG. 1A shows a reference point-based 5G system architecture according to an embodiment of this application;
FIG. 1B shows another reference point-based 5G system architecture according to an embodiment of this application;
FIG. 2 is a schematic flowchart of quality of service notification control according to an embodiment of this application;
FIG. 3 shows a 5G QoS model to which a quality of service processing method is applicable according to an embodiment of this application;
FIG. 4 is a schematic flowchart of a quality of service processing method according to an embodiment of this application;
FIG. 5 is a schematic flowchart of an example of a quality of service processing method according to an embodiment of this application;
FIG. 6 is a schematic flowchart of another quality of service processing method according to an embodiment of this application;
FIG. 7 is a schematic flowchart of an example of another quality of service processing method according to an embodiment of this application;
FIG. 8 is a schematic flowchart of still another quality of service processing method according to an embodiment of this application;
FIG. 9 is a schematic flowchart of an example of still another quality of service processing method according to an embodiment of this application;
FIG. 10 is a schematic diagram of a structure of a quality of service processing apparatus according to an embodiment of this application; and
FIG. 11 is a schematic diagram of a structure of a quality of service processing device according to an embodiment of this application.

### DESCRIPTION OF EMBODIMENTS

Embodiments of this application provide a quality of service processing method and apparatus. The method and the apparatus are based on a same or similar technical concept. Because the method and the apparatus have a similar problem-resolving principle, for implementations of the apparatus and the method, refer to each other, and repeated parts are not described.

The following first explains and describes some terms in embodiments of this application, to facilitate understanding of a person skilled in the art.
(1) A session management network element in embodiments of this application may be an SMF network element in a communication system architecture, and is responsible for tunnel maintenance, IP address allocation and management, UP function selection, control of policy enforcement and QoS, charging data collection, roaming, and the like.
   Embodiments of this application may be performed by the session management network element or a chip corresponding to the session management network element. In addition, the session management network element in embodiments of this application may be a physical entity network element, or may be a virtual network element. A specific form of the session management network element is not limited in this application.
(2) An access network device in embodiments of this application may be a device that provides access for a terminal device, and includes a radio access network (Radio Access Network, RAN) device and an AN device. The RAN device is mainly a wireless network device in a 3GPP network, and the AN may be an access network device defined in non-3GPP. The RAN device is responsible for functions, on an air interface side, such as radio resource management, quality of service (quality of service, QoS) management, and data compression and encryption. The RAN device may include base stations in various forms, for example, a macro base station, a micro base station (also referred to as a small cell), a relay station, and an access point. In systems that use different radio access technologies, names of a device that has a base station function may be different. For example, in a 5th generation (5th generation, 5G) system, the device is referred to as a RAN or a gNB (5G NodeB), in an LTE system, the device is referred to as an evolved NodeB (evolved NodeB, eNB or eNodeB), and in a 3rd generation (3rd generation, 3G) system, the device is referred to as a NodeB (NodeB). A specific form of the access network device is not limited in this application.
(3) A policy control network element in embodiments of this application may be a PCF network element in the communication system architecture, and is configured to provide a policy rule for a network entity for enforcement, and may support a unified policy framework to govern network behavior and access subscription information of a unified data repository. For example, the policy control network element in embodiments of this application is configured to deliver a rule to the session management network element, and is further configured to manage a service flow, to be specific, modify or delete a quality of service parameter of the service flow.
   Embodiments of this application may be performed by the policy control network element or a chip corresponding to the policy control network element. In addition, the policy control network element in this application may be a physical entity network element, or may be a virtual network element. A specific form of the policy control network element is not limited in this application.
(4) Quality of service (Quality of Service, QoS) in embodiments of this application may usually indicate a sum of features and characteristics in which a service can meet specified and potential requirements, that is, a degree to which a service work can meet a requirement of a person who is served.

In the solutions of this application, the quality of service may be represented as a technology for effectively managing a network resource, and end-to-end quality of service assurance may be provided for different requirements of various services. Specifically, one network may use various basic technologies to provide a better service capability for specified network communication, to avoid problems such as a network delay and congestion. In addition, for a network with a limited capacity, especially streaming multi-media applications such as a network phone (Voice over Internet Protocol, VoIP) and an interactive personality TV (Interactive Personality TV, IPTV), such media applications require a fixed transmission rate and are sensitive to a delay. Therefore, it is exceedingly important to ensure the quality of service.

In conclusion, the QoS may be overall performance measurement of a service experienced by a network user. For example, quality of service of a network may be measured by measuring related aspects of a service, for example, a QoS packet error rate, a bit rate, a throughput, a transmission delay, availability, and jitter.

(5) A quality of service parameter of a service flow in embodiments of this application may be quality of service parameter/attribute information of the service flow. In other words, quality of service of the service flow is measured by using a series of measurable quality of service parameters/attributes. The network may configure the corresponding service flow based on the quality of service parameter/attribute information, so that the service flow provides better quality of service for specified network communication. Specifically, the quality of service parameter/attribute may include but is not limited to a priority level, a packet delay budget, a maximum data burst volume, a quality of service identifier, and notification control information, where the quality of service identifier may be a 5QI.

(6) A policy and charging control rule (Policy and Charging Control Rule, PCC Rule) in embodiments of this application may be represented as a set of a series of related information and a series of related operations. The related information may mainly include three types of information: (1) service data flow check information, (2) policy control information, and (3) charging-related information.

The PCC rule may be used to detect a service data flow (Service Data Flow, SDF) and include a rule set of performing policy control and charging on the service data flow. Therefore, a function of the PCC rule may specifically include but is not limited to detecting a service data flow to which a data packet (for example, an IP packet) belongs, identifying the service data flow to provide policy control, and the like.

In addition, the PCC rule may be generally classified into a dynamic PCC rule and a static predefined PCC rule. For the dynamic PCC rule, an interface Gx of a policy and charging rules function (Policy and Charging Rules Function, PCRF) unit delivers the PCC rule to a policy and charging enforcement function (Policy and Charging Enforcement Function, PCEF) unit, and then the PCEF unit executes the PCC rule. In this process, the PCRF unit may not only establish such type of rule, but also modify or delete such type of rule. It should be noted that, in 5G communication, a policy control function (policy control function, PCF) unit delivers the PCC rule to a session management function SMF unit through an N7 interface, and then the SMF unit executes the PCC rule. The static predefined PCC rule is preconfigured by the PCEF unit, and the PCRF unit can only reference such type of rule.

It should be noted that, in this application, the PCC rule is at an SDF granularity, but a 5G QoS model is at a QoS flow granularity, in other words, the access device RAN performs scheduling based on the QoS flow granularity. Therefore, the service data flow SDF needs to be mapped to a QoS flow, to implement QoS control or processing.

(7) Binding processing in embodiments of this application may be a process of associating the service data flow (defined in the PCC rule by using an SDF template) with a service flow used as a transmitted service data flow. A binding mechanism may specifically include three steps. Step 1: Bind sessions, where an application function session (AF Session) and a PDU session are in one-to-one correspondence. Step 2: The PCF network element authorizes the PCC rule, and allocates a QoS parameter to the PCC rule. Step 3: The SMF network element binds the PCC rule to the service flow QoS flow, so that the PCC rule corresponds to the QoS flow. When the PCF network element provides the PCC rule, the SMF network element should evaluate whether there is a QoS flow whose QoS parameter is the same as a parameter of the bound PCC rule. If there is no QoS flow of this type, the SMF network element uses the parameter in the PCC rule to export a QoS parameter of a new QoS flow, and binds the PCC rule to the QoS flow. Certainly, there are still some special cases in which the SMF network element needs to bind the PCC rule to a default QoS flow (where the QoS flow is associated with a default QoS rule) or a separate QoS flow, for example, when there is an alternative QoS parameter set(s) in the PCC rule. It should be additionally noted that the service flow in this application may alternatively be understood as a quality of service flow, or the quality of service flow may include one or more service flows. This is not limited in this application.

In addition, when the PCC rule is bound to and associated with the QoS flow in the PDU session, the following parameters/attributes may be used for execution: a 5QI, an allocation and retention priority (Allocation and Retention Priority, ARP), quality of service notification control (QoS Notification Control, QNC), a priority level, an averaging window Averaging Window, and a maximum data burst volume Maximum Data Burst Volume. It should be noted that different PCC rules having the foregoing parameters/attributes may be bound to different QoS flows.

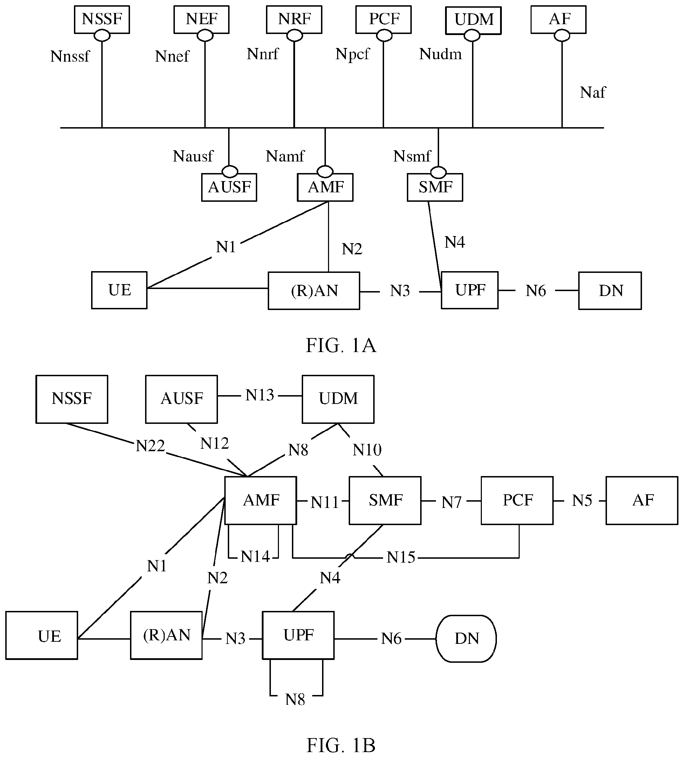

A quality of service processing method provided in embodiments of this application is applicable to a reference point-based non-roaming 5G system architecture. FIG. 1A and FIG. 1B show two reference point-based non-roaming 5G system architectures. In addition, the quality of service processing method provided in embodiments of this application is further applicable to a service-based 5G system architecture. This is not specifically limited in this application.

The following describes specific network elements/modules in the 5G system architecture in detail.

A 5G system mainly includes a network slice selection function (Network Slice Selection Function, NSSF) network element, a network exposure function (Network Exposure Function, NEF) network element, a network repository function (NF Repository Function, NRF) network element, a policy control function (Policy Control Function, PCF) network element, a unified data management (Unified Data Management, UDM) network element, an application function (Application Function, AF) network element, an authentication server function (Authentication Server Function, AUSF) network element, an access and mobility management function (Access and Mobility Management Function, AMF) network element, a session management function (Session Management Function, SMF) network element, a terminal device (User Equipment, UE), an access network ((Radio) Access Network, (R)AN) device, a user plane function (User Plane Function, UPF) network element, and a data network (Data Network, DN). For ease of description, a policy control function is used as an example, and the policy control function network element may be referred to as a PCF network element for short. Other network elements are similar. Details are not described again.

Refer to FIG. 1A. Nnnsf, Nnef, Nausf, Nnrf, Namf, Npcf, Nsmf, Nudm, and Naf are respectively service-based interfaces presented by the NSSF, the NEF, the AUSF, the NRF, the SMF, the PCF, the SMF, the UDM, and the AF. Refer to FIG. 1B. N1 is a reference point between the UE and the AMF, N2 is a reference point between the (R)AN and the AMF, N3 is a reference point between the (R)AN and the UPF, N4 is a reference point between the SMF and the UPF, and N6 is a reference point between the UPF and the DN. By analogy, N7, N8, and the like are reference points between corresponding connected network elements. Details are not described herein again.

The PCF network element is configured to provide a policy rule for a network entity for enforcement, and may support a unified policy framework to govern network behavior and access subscription information of a unified data repository (UDR).

The UDM network element is configured to: manage user data in a unified manner, store an authentication certificate/authentication parameter, and store and manage a permanent user ID (or a permanent identifier (Subscription Permanent Identifier, SUPI) of the UE) in the 5G system, and is used for registration management of a serving network element (for example, the AMF or the SMF that currently provides a service for the terminal) of a user.

The AF network element is various services at an application layer, and may be an internal application of an operator, or may be a third-party AF network element (for example, a video server or a game server). If the AF network element is an internal AF of the operator, and is in a trusted domain with another NF, the AF network element may directly interact with and access the another NF network element, for example, the PCF network element, but the third-party AF network element needs to access the another NF via the NEF.

The AMF network element is configured to perform registration, connection, reachability, and mobility management. The AMF network element provides a session management message transmission channel for the UE and the SMF network element, provides authentication and authorization functions for access of the user, is a core network control plane access point between the terminal and the radio, and may be similar to a mobility management entity (Mobility Management Entity, MME) in 4G.

The SMF network element is responsible for tunnel maintenance, IP address allocation and management, UP function selection, control of policy enforcement and QoS, charging data collection, roaming, and the like.

The UE is a handheld terminal, a notebook computer, a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The terminal device and the access network device communicate with each other by using an air interface technology.

The (R)AN device is a device that provides access for the terminal device, and includes a RAN device and an AN device. The RAN device is mainly a wireless network device in a 3GPP network, and the AN may be an access network device defined in non-3GPP. The radio access network (Radio Access Network, RAN) device is mainly responsible for functions, on an air interface side, such as radio resource management, quality of service (quality of service, QoS) management, and data compression and encryption. The RAN device may include base stations in various forms, for example, a macro base station, a micro base station (also referred to as a small cell), a relay station, and an access point. In systems that use different radio access technologies, names of a device that has a base station function may be different. For example, in a 5th generation (5th generation, 5G) system, the device is referred to as a RAN or a gNB (5G NodeB), in an LTE system, the device is referred to as an evolved NodeB (evolved NodeB, eNB or eNodeB), and in a 3rd generation (3rd generation, 3G) system, the device is referred to as a NodeB (NodeB).

The UPF network element is used for routing and forwarding of a user data packet, data exchange with the external data network DN, QoS handling for a user plane, enforcement of a flow control rule (for example, gating control, redirection, and traffic steering), and the like. The data network DN is a serving network, for example, an IMS (IP Multi-media Service, IP multi-media service) or the Internet, for example, an operator service, an internet service, or a third-party service, that provides a data transmission service for the user. The UE accesses the data network (DN, Data Network) through a PDU (Packet Data Unit, packet data unit) session established between the UE and the DN.

It should be noted that the solutions in this application are not only applicable to the foregoing 5G system architecture, but also applicable to but not limited to a long term evolution (long term evolution, LTE) communication system and various future evolved wireless communication systems.

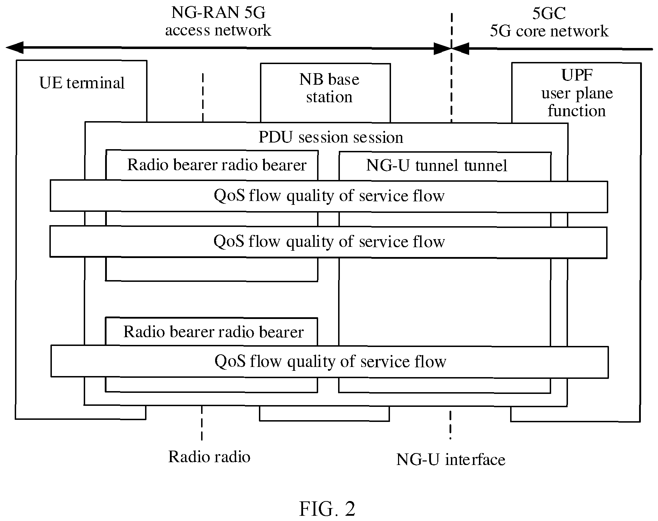

In addition, in the 5G system, to ensure end-to-end quality of service of a service, for a 5G QoS model architecture to which the quality of service processing method provided in embodiments of this application is applicable, refer to FIG. 2. Usually, one terminal device, namely, UE, may establish one or more packet data unit PDU sessions (PDU Sessions) with the 5G system, and one or more quality of service flows (QoS flows) may be established in each PDU session. Each quality of service flow (QoS flow) may be identified by using one quality of service flow identifier (QFI).

A 5G QoS model may support two types of QoS flows: a guaranteed bit rate QoS flow (GBR QoS flow) and a non-guaranteed bit rate QoS flow (Non-GBR QoS flow), and may determine, based on a corresponding QoS profile, namely, a QoS configuration file, whether a current service flow QoS flow is the GBR QoS flow or the non-GBR QoS flow.

For the GBR QoS flow, a QoS configuration file corresponding to the GBR QoS flow may specifically include the following QoS parameters: a 5QI, an allocation and retention priority ARP, a guaranteed flow bit rate GFBR, and a maximum flow bit rate (Maximum Flow Bit Rate, MFBR). Because the QoS configuration file may further include notification control, depending on whether the QoS configuration file includes the notification control notification control, the GBR QoS flow may be further classified into a GRB QoS flow that uses the notification control and a GBR QoS flow that does not use the notification control.

It should be noted that, for the GRB QoS flow that uses the notification control, if the radio access network RAN device detects that a corresponding QoS flow resource cannot be met or is re-met, the RAN device may notify the session management function SMF network element, so that the SMF network element can initiate a QoS flow deletion or modification procedure.

For the non-GBR QoS flow, a QoS configuration file corresponding to the non-GBR QoS flow may include the following QoS parameters: a 5QI and an allocation and retention priority ARP, and may further include a reflective QoS attribute (Reflective QoS Attribute, RQA).

The following describes the foregoing QoS parameters in detail.
(1) The 5QI is a scalar, and may be used to index a corresponding 5G QoS feature. The 5QI may include a standardized 5QI, a preconfigured 5QI, and a dynamically allocated 5QI. The standardized 5QI may be in one-to-one correspondence with a group of standardized 5G QoS feature values. A 5G QoS feature value corresponding to the preconfigured 5QI is preconfigured in an access network (AN) node. A 5G QoS feature corresponding to the dynamically allocated 5QI is included in the QoS configuration file and sent to the access network (AN) node.
(2) The allocation and retention priority ARP may include a priority level, a pre-emption capability, and pre-emption vulnerability.
(3) The reflective QoS attribute RQA indicates a service transmitted by using a corresponding QoS flow to use reflective QoS.
(4) The notification control notification control indicates, to the RAN, whether to notify a network when the GFBR cannot be met during the lifetime of the QoS flow.
(5) The guaranteed flow bit rate GFBR may indicate a bit rate expected to be provided for the GBR QoS flow.
(6) The maximum flow bit rate MFBR is used to limit a bit rate provided for the GBR QoS flow, and is a maximum bit rate provided for the GBR QoS flow. If the bit rate is exceeded, a data packet may be discarded.

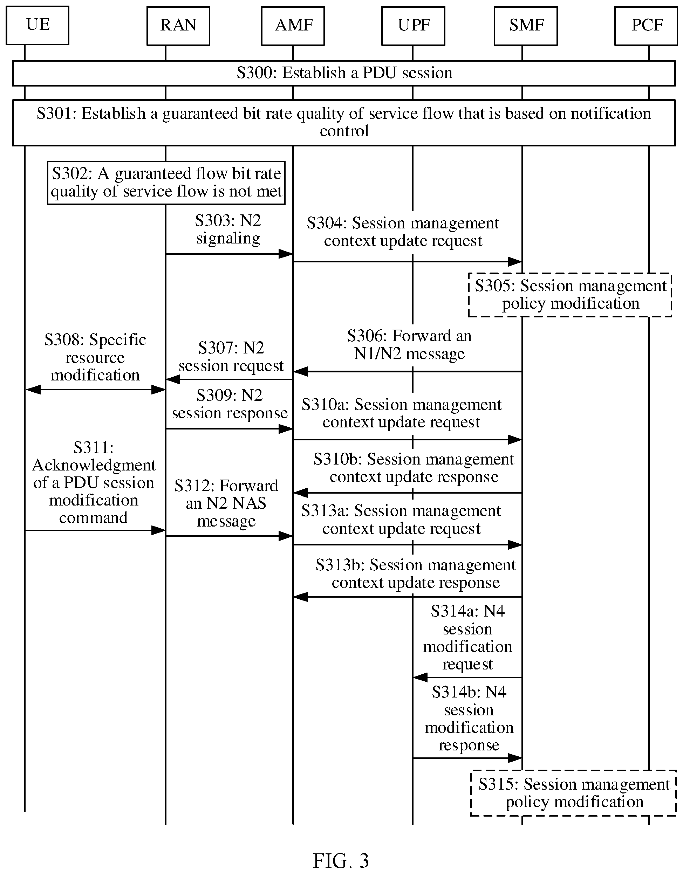

The following describes in detail a control procedure of the GRB QoS flow that uses the notification control. Refer to FIG. 3. The following steps may be specifically included.

S300: A terminal, namely, UE, establishes a PDU session with a network side.

S301: The UE establishes, with the network side, a GRB QoS flow that uses notification control (where a PCF network element may deliver a PCC rule to an SMF network element, and the SMF network element may send indication information to a radio access network RAN device according to the PCC rule).

S302: After establishment is completed for a period of time, the RAN device detects that a QoS target of the GBR QoS flow cannot be met, to be specific, actual quality of service QoS of the guaranteed bit rate quality of service flow does not reach target quality of service, and a GBR QoS flow configuration file includes the notification control notification control.

S303: The RAN device sends an N2 message to an access and mobility management function AMF network element, where the N2 message includes a PDU session identity ID and N2 SM information, the N2 SM information includes a quality of service flow identifier QFI, and the N2 SM information indicates that the QoS target of the QoS flow cannot be met.

S304: The AMF network element sends a session management context update request Nsmf_PDUSessionUpdateSMContext to the SMF network element, where the request includes the quality of service flow identifier QFI and a notification notification.

S305: After the SMF network element receives the request, when the SMF network element determines that a dynamic PCC rule may be used for the PDU session, and the GBR QoS flow subscribed to by the PCF network element cannot be met, the SMF network element needs to indicate the event to the PCF network element, and the SMF network element performs a session management policy modification procedure, to report the event. When the SMF network element determines that the dynamic PCC rule cannot be used for the DNN, the SMF network element may determine, according to a local policy, to initiate a session modification procedure.

That the SMF network element performs the session management policy modification procedure may include the following steps.

S306: The SMF network element sends Namf_Communication_N1N2MessageTransfer to the AMF network element, where the message includes the N2 SM information and an N1 SM container.

When the SMF network element determines to delete the GBR QoS flow, the N2 SM information includes the PDU session ID and the quality of service flow QoS flow identifier QFI, and the N1 SM container includes the PDU session ID, an affected QoS rule, and a corresponding QoS rule operation (that is, deletion).

When the SMF network element determines to modify the GBR QoS flow, the N2 SM information includes the PDU session ID, the quality of service flow QoS flow identifier QFI, and a QoS configuration file, and the N1 SM container includes the PDU session ID, an affected QoS rule, and a corresponding QoS rule operation (for example, deletion or modification).

S307: The AMF network element sends an N2 PDU session request to the RAN device, where the request includes the N2 SM information and an N2 NAS message, and the NAS message includes the PDU session ID and the N1 SM container.

S308: The RAN device may perform a (R)AN-specific signaling procedure with the UE based on the information sent by the SMF network element. If a 3GPP RAN is currently accessed, RRC connection reconfiguration is performed between the UE and an AN to modify a corresponding RAN device resource.

S309: The RAN device sends an N2 session response message to the AMF network element, where the response message includes the N2 SM information.

S310a: The AMF network element sends an Nsmf_PDU Session_Update SM Context service operation to the SMF network element, where a service includes the N2 SM information.

S3 10b: The SMF network element returns an Nsmf_PDU Session Update SM Context response to the AMF network element.

S311: The UE sends an acknowledgment message of a PDU session modification command to the RAN device, where the message includes the PDU session ID and the N1 SM container, and the N1 SM container is determined based on the PDU session modification command.

S312: The RAN network element forwards the N2 NAS message to the AMF network element.

S313a: The AMF network element sends a session management context update request Nsmf_PDU Session_Update SM Context to the SMF network element.

S313b: The SMF network element returns an Nsmf_PDUSession_UpdateSMContext response to the AMF network element.

That the SMF network element and a UPF network element perform a PDU session modification procedure may include step S314a and step S314b.

S314a: The SMF network element sends a session modification request N4 session modification request to the UPF network element.

S314b: The UPF network element returns a session modification response N4 session modification response to the SMF network element.

S315: The SMF network element and the PCF network element perform the session management policy modification procedure, to be specific, the SMF network element notifies the PCF network element whether the corresponding PCC rule is executed.

If the SMF network element has received a notification that "a GFBR can no longer be guaranteed", and an NG-RAN device determines that the GFBR can be met currently, the NG-RAN device should send a notification to the SMF network element, for example, a notification that "the GFBR can be re-guaranteed".

It should be noted that, for control of other QoS flows (to be specific, a non-GBR QoS flow and a GBR QoS flow that does not require the notification control), when detecting that a resource cannot be met, the RAN device directly initiates, to the SMF network element, a procedure of deleting the QoS flows, instead of reporting indication information, and the SMF network element determines control of the QoS flows.

For example, the quality of service flow in the foregoing procedure may also be referred to as a service flow.

In conclusion, for a GBR QoS flow that uses notification control information, after the GBR QoS flow is established, at any moment, if the RAN device detects that corresponding QoS of the GBR QoS flow does not reach target quality of service, the RAN device sends indication information to the session management function SMF network element. The SMF network element may initiate, based on the indication information, a processing procedure of modifying or deleting a QoS parameter/attribute of the GBR QoS flow, that is, a procedure of processing the quality of service parameter of the QoS flow.

However, in a conventional technology, when the (R)AN device processes the QoS parameter/attribute of the QoS flow, additional signaling interaction is usually required to accurately process the QoS parameter/attribute. Consequently, efficiency of processing the QoS parameter/attribute of the QoS flow is low.

Therefore, a quality of service processing method urgently needs to be proposed, to accurately process quality of service of a service flow, so that the quality of service of the service flow can meet corresponding target quality of service, and signaling interaction in a processing process can be reduced.

Embodiments of this application provide a quality of service processing method. The method is applicable to but is not limited to the 5G system architectures in FIG. 1A and FIG. 1B, and the method may be performed by the network element in this application, or may be performed by a chip corresponding to the network element in this application. The network element in this application may be a physical entity network element, or may be a virtual network element. A form of the network element in this application is not specifically limited.

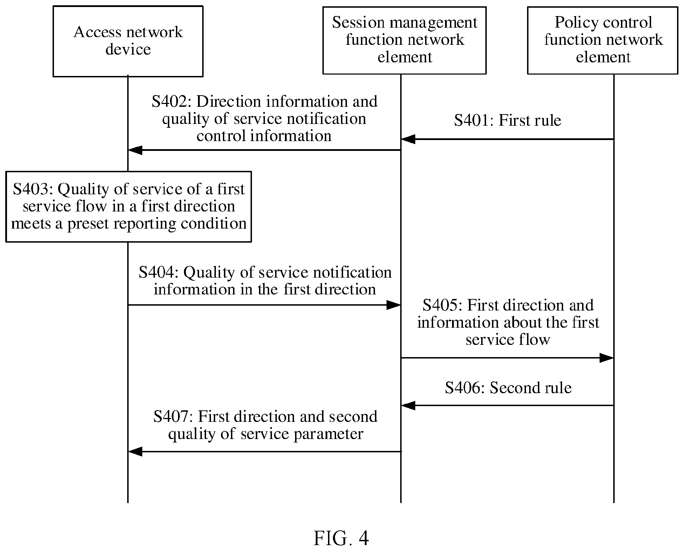

FIG. 4 is a flowchart of a specific implementation method according to an embodiment of this application. Specifically, the method may include the following steps.

S401: A session management network element receives a first rule from a policy control network element.

Specifically, the first rule includes direction information and quality of service notification control information, the direction information indicates a direction of a first service flow, the direction information includes an uplink direction and/or a downlink direction, the quality of service notification control information indicates to send notification information to the policy control network element when quality of service of the first service flow meets a preset reporting condition, and first target quality of service corresponds to the first service flow.

Optionally, the preset reporting condition may include: The quality of service of the first service flow does not meet target quality of service of the first service flow or meets target quality of service of the first service flow. For example, meeting the target quality of service of the first service flow may be re-meeting the target quality of service of the first service flow. To be specific, a status of the first service flow changes from not meeting the target quality of service of the first service flow to meeting the target quality of service of the first service flow.

It should be noted that the direction information in the first rule delivered by the policy control network element to an access network device via the session management network element may indicate the access network device to report quality of service notification information in a corresponding direction, so that a network side adjusts a quality of service parameter of a service flow in the corresponding direction, and may be used as a parameter for binding a rule to a service flow by the session management network element. For example, when binding the first rule to the service flow, the session management network element needs to consider whether direction information of the service flow is the same as the direction information in the first rule.

S402: The session management network element sends the direction information and the quality of service notification control information to the access network device.

Optionally, before the session management network element sends the direction information and the quality of service notification control information to the access network device, the method further includes: The session management network element binds the first rule to the first service flow based on the direction information and the quality of service notification control information.

Specifically, that the session management network element binds the first rule to the first service flow based on the direction information and the quality of service notification control information may include but is not limited to the following two implementations.

In a first implementation, the first service flow may be a currently existing service flow. The session management network element determines that direction information of the first service flow is the same as the direction information in the first rule, and quality of service notification control information of the first service flow is the same as the quality of service notification control information in the first rule. The session management network element binds the first rule to the first service flow, where the bound first rule corresponds to the first service flow.

In a second implementation, the session management network element creates the first service flow, where direction information of the first service flow is the same as the direction information in the first rule, and quality of service notification control information of the first service flow is the same as the quality of service notification control information in the first rule. The session management network element binds the first rule to the first service flow, where the bound first rule corresponds to the first service flow.

According to the second implementation, the session management network element sends a first message to the access network device, where the first message includes identification information of the first service flow and the direction corresponding to the first service flow. In the step, the session management network element sends the first message to the access network device, to notify the access network device of the identification information and the direction of the first service flow created by the session management network element.

It should be noted that, when the foregoing two binding manners are used, the first rule may further include other information, for example, a set parameter/attribute. In this case, a parameter/an attribute of this type of the first service flow also needs to be the same as a corresponding parameter/attribute included in the first rule. The other information is not specifically limited in this application.

In addition, the step in which the session management network element binds the first rule to the first service flow based on the direction information is an optional step, to be specific, the step may or may not be performed. If the session management network element does not perform the step, the session management network element binds the first rule to the first service flow in the manner described in the background. If the session management network element performs the binding step, the direction information included in information that is about the first service flow and that is sent by the session management network element to the access network device is the same as the direction information included in the first rule. If the session management network element does not perform the binding step, the direction information included in information that is about the first service flow and that is sent by the session management network element to the access network device may be direction information in all PCC rules bound to the service flow. For example, when a plurality of PCC rules are bound to a same service flow, and direction information included in the plurality of PCC rules is different, the session management network element needs to deliver a plurality of different pieces of direction information for the service flow.

S403: The access network device determines that the quality of service of the first service flow in a first direction meets the foregoing preset reporting condition, where the first direction includes at least one direction in the foregoing direction information.

For example, the access network determines that a current flow bit rate in the uplink direction does not meet or re-meets a guaranteed flow bit rate GFBR in the uplink direction.

S404: The access network device sends quality of service notification information in the first direction to the session management network element.

The quality of service notification information in the first direction notifies that the quality of service of the first service flow in the first direction does not meet the first target quality of service or re-meets the first target quality of service.

Specifically, when step S404 is performed, the following several cases may be included.

In a first case, if the session management network element subscribes only to unidirectional quality of service notification control information, for example, quality of service notification control information in the first direction, after the access network device receives the unidirectional information, that is, the uplink direction or the downlink direction, and the quality of service notification control information from the session management network element, the access network device detects only quality of service in the direction. When determining that the quality of service in the direction does not meet or re-meets target quality of service in the corresponding direction, the access network device may need to send only quality of service notification information to the session management network element, and may not need to send the direction information to the session management network element. After receiving the quality of service notification information, the session management network element may determine that the quality of service notification information is the quality of service notification information in the first direction.

In a second case, the session management network element subscribes to bidirectional quality of service notification control information, that is, quality of service notification control information in the uplink direction and the downlink direction. After the access network device receives the direction information and the quality of service notification control information from the session management network element, if the access network device detects that quality of service in a direction, for example, quality of service in the first direction, does not meet target quality of service in the corresponding direction, the access network device needs to send the first direction and the quality of service notification information in the direction to the session management network element, and the session management network element receives the first direction and the quality of service notification information in the direction.

S405: The session management network element sends the first direction and the information about the first service flow to the policy control network element.

Specifically, the information about the first service flow may include a service data flow ID, and may further include indication information indicating "not meeting or re-meeting". The information about the first service flow may be for notifying the policy control network element that a quality of service parameter of the service flow corresponding to the information about the first service flow needs to be adjusted. Therefore, the information about the first service flow may not be specifically limited in this application.

S406: The session management network element receives a second rule from the policy control network element.

Specifically, the second rule includes the first direction and a second quality of service parameter of a service flow in the first direction, where the second quality of service parameter indicates current quality of service of the service flow in the first direction, and the second quality of service parameter is obtained by the policy control network element by updating a first quality of service parameter of the service flow in the first direction after receiving the first direction and the information about the first service flow.

Optionally, the quality of service parameter in the solutions of this application includes but is not limited to one or more of the following: a priority level, a packet delay budget, a maximum data burst volume, a 5G quality of service identifier 5QI, and notification control information.

It should be understood that before step S406 is performed, because the quality of service parameter of the service flow in the first direction, that is, the first quality of service parameter, has existed on the policy control network element side, after receiving the first direction and the information about the first service flow that are sent by the session management network element, if the policy control network element determines that the quality of service of the first service flow does not meet or re-meets the first target quality of service, the policy control network element modifies the first quality of service parameter of the first service flow in the direction to the second quality of service parameter, to ensure that the quality of service of the first service flow meets the first target quality of service.

In an implementation, after the session management network element receives a second rule from the policy control network element, the method further includes: The session management network element binds the second rule to a second service flow based on the first direction and the second quality of service parameter.

Specifically, that the session management network element binds the second rule to a second service flow based on the first direction and the second quality of service parameter includes but is not limited to the following two implementations.

In a first implementation, the second service flow is a service flow existing in the session management network element. The session management network element determines that a direction of the second service flow is the first direction, and a quality of service parameter of the second service flow is the same as the second quality of service parameter in the second rule. The session management network element binds the second rule to the second service flow, where the bound second rule corresponds to the second service flow.

In a second implementation, the session management network element creates the second service flow, where a direction of the second service flow is the first direction, and a quality of service parameter of the second service flow is the same as the second quality of service parameter in the second rule. The session management network element binds the second rule to the second service flow, where the bound second rule corresponds to the second service flow.

According to the second implementation, the session management network element sends a second message to the access network device, where the second message includes identification information of the second service flow and the direction corresponding to the second service flow. In the step, the session management network element sends the second message to the access network device, to notify the access network of the identification information and the direction of the second service flow created by the session management network element.

It should be noted that, when the foregoing two binding manners are used, that other information of the second service flow, for example, a parameter/an attribute, is also the same as a parameter/an attribute included in the second rule further needs to be determined. The parameter/attribute is not specifically limited in this application.

Optionally, the foregoing related rule may be but is not limited to the PCC rule.

S407: The session management network element sends the first direction and the second quality of service parameter to the access network device.

The second quality of service parameter is a second quality of service parameter of the first service flow.

In an implementation, the session management network element further needs to send the first direction and the second quality of service parameter of the first service flow to a terminal device.

It should be understood that the session management network element may separately send the first direction and the second quality of service parameter of the first service flow to the access network device and the terminal at the same time, or may separately send the first direction and the second quality of service parameter of the first service flow to the access network device and the terminal at different time.

It should be noted that, before all the foregoing steps of quality of service processing are performed in this application, that is, before the terminal device interacts with or communicates with the network side, the terminal has established a session connection, for example, a PDU session, to the network side. In addition, because the PCF network element may independently adjust a parameter/an attribute value in a direction without using QNC step S406 and step S407 may alternatively be performed separately from step S401 to step S405, that is, step S406 and step S407 may be performed independently.

In conclusion, in the specific implementation method shown in FIG. 4, the session management network element receives the first rule from the policy control network element, and sends, to the access network device, the direction information and the quality of service notification control information that are included in the first rule, where the quality of service notification control information indicates to send the notification information to the policy control network element when the quality of service of the first service flow does not meet the first target quality of service or re-meets the first target quality of service. When the access network device detects that the quality of service of the first service flow in the first direction does not meet the first target quality of service or re-meets the first target quality of service, the access network device sends the quality of service notification information in the first direction to the session management network element. After receiving the quality of service notification information in the first direction, the session management network element sends the first direction and the information about the first service flow to the policy control network element, so that the policy control network element can accurately process the first service flow in the first direction based on the first direction and the information about the first service flow. In this way, the quality of service of the first service flow in the first direction can meet the first target quality of service. In addition, the direction information is carried in information transmitted in a quality of service processing process, and no additional interaction of transmission of the direction information is required, thereby reducing additional signaling interaction in the quality of service processing process.

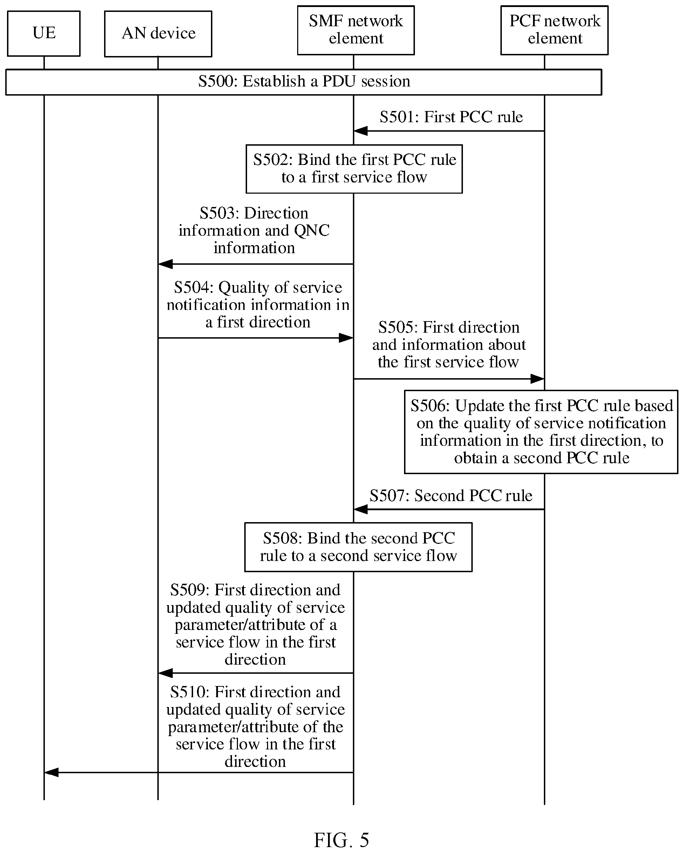

According to the specific implementation method provided in the foregoing embodiment, the following describes the method in this application in detail with reference to a specific embodiment. Refer to FIG. 5. An execution object on a network side in this embodiment is a network element. A PCF network element in this embodiment is the policy control network element in FIG. 4, an SMF network element in this embodiment is the session management network element in FIG. 4, and an AN device in this embodiment is the access network device in FIG. 4. A specific implementation procedure of this embodiment is as follows.

S500: UE establishes a PDU session with the network side.

A terminal, namely, the UE, establishes the PDU session with the network side. For details, refer to a conventional technical solution. Details are not described in this application.

It should be understood that the network side mainly includes but is not limited to the access network device, the SMF network element, and the PCF network element.

S501: The PCF network element sends a first PCC rule to the SMF network element.

For example, the first PCC rule includes direction information and QNC information.

Correspondingly, the SMF network element receives the first PCC rule.

Specifically, the direction information indicates a direction of a first service flow, the direction information includes an uplink direction and/or a downlink direction, and the QNC information indicates to send notification information to the PCF network element when quality of service of the first service flow does not meet first target quality of service or re-meets first target quality of service, where the first target quality of service corresponds to the first service flow.

For example, if the direction information in the first PCC rule includes the uplink direction, the QNC information may indicate to send notification information to the PCF network element when current quality of service of a service flow in the uplink direction does not meet or re-meets target quality of service in the corresponding direction. If the direction information in the first PCC rule includes the downlink direction, the QNC information indicates to send notification information to the PCF network element when current quality of service of a service flow in the downlink direction does not meet or re-meets target quality of service in the corresponding direction.

It should be noted that step S501 corresponds to step S401, and mutual reference may be made between step S501 and step S401.

In addition, the QNC information and the corresponding direction information that are included in the first PCC rule may be set to information including QNC and a direction, or may be set to a separate parameter. To be specific, one separate parameter may indicate that the QNC information needs to be used in the uplink direction, and the other separate parameter may indicate that the QNC information needs to be used in the downlink direction. Specific parameter setting is not specifically limited in this application. For example, if the QNC information and the corresponding direction information that are included in the first PCC rule may be set to A, it may indicate to send the notification information to the PCF network element when the quality of service of the service flow in the uplink direction does not meet or re-meets the target quality of service in the corresponding direction. If the QNC information and the corresponding direction information that are included in the first PCC rule may be set to B, it may indicate to send the notification information to the PCF network element when the quality of service of the service flow in the downlink direction does not meet or re-meets the target quality of service in the corresponding direction.

S502: The SMF network element binds the first PCC rule to the first service flow.

For example, the service flow may be a QoS flow.

Specifically, after the SMF network element receives the first PCC rule, the SMF network element determines whether the first service flow has existed in the SMF, where direction information of the first service flow is the same as the direction information included in the first PCC rule, and quality of service notification control QNC information of the first service flow is the same as the quality of service notification control QNC information included in the first PCC rule.

It should be understood that another parameter of the first service flow also needs to be the same as a corresponding parameter included in the first PCC rule. A specific parameter type is not specifically limited in this application.

If the first service flow has existed in the SMF network element, the SMF network element binds the first PCC rule to the first service flow. If the first service flow does not exist in the SMF network element, the SMF network element creates the first service flow, and then binds the first PCC rule to the created first service flow, and the SMF network element sends a first message to the AN device, where the first message includes identification information of the first service flow and the direction corresponding to the first service flow.

It should be understood that the direction information of the first service flow created by the SMF network element is the same as the direction information in the first PCC rule, and the QNC information of the created first service flow is the same as the QNC information in the first PCC rule. In addition, the another parameter of the first service flow created by the SMF network element is also the same as the corresponding parameter included in the first PCC rule. The specific parameter type is not specifically limited in this application.

It should be noted that step S502 corresponds to the binding process in step S402, and mutual reference may be made between step S502 and the binding process in step S402. In addition, step S502 is an optional step. The SMF network element may perform the step or may not perform the step. This is not specifically required in this embodiment of this application.

S503: The SMF network element sends the direction information and the QNC information to the AN device.

Correspondingly, the AN device receives the direction information and the QNC information.

The direction information and the QNC information may be carried in a first quality of service file, for example, a QoS profile, and the SMF network element sends the first quality of service file to the AN device.

It should be noted that step S503 corresponds to step S402, and mutual reference may be made between step S503 and step S402. In addition, if the SMF network element has performed the binding step in step S502, the direction information sent by the SMF network element to the AN device includes the direction of the first service flow. If the SMF network element does not perform the binding step in step S502, the direction information sent by the SMF network element to the AN device is the same as the direction information included in the first PCC rule.

S504: The AN device sends quality of service notification information in a first direction to the SMF network element, where the quality of service notification information in the first direction notifies that the quality of service of the first service flow in the first direction does not meet the first target quality of service or re-meets the first target quality of service, and the first direction includes at least one direction in the foregoing direction information.

Correspondingly, the SMF network element receives the quality of service notification information in the first direction.

Specifically, after the AN device receives the QoS profile that carries the direction information and the QNC information, if the AN device determines, based on the direction information included in the QoS profile, for example, the first direction, that quality of service of a service flow in the first direction does not meet or re-meets target quality of service in the direction, the AN device sends the quality of service notification information in the first direction to the SMF network element.

It should be noted that, if the SMF network element subscribes only to unidirectional QNC information, or has performed binding in step S502, that is, unidirectional binding, the AN device may not send the direction information to the SMF network element. After receiving the quality of service notification information, the SMF network element may also determine a corresponding direction by itself. If the SMF network element subscribes to bidirectional QNC information, and does not perform binding in step S502, when sending the quality of service notification information to the SMF network element, the AN device further needs to send the corresponding direction information, that is, information about the first direction, so that the SMF network element can determine that a quality of service parameter/attribute in the corresponding direction needs to be updated, and further report the quality of service notification information in the direction to the PCF network element.

It should be noted that step S504 corresponds to step S403 and step S404, and mutual reference may be made between step S504, step S403, and step S404.

S505: The SMF network element sends the quality of service notification information in the first direction to the PCF network element.

Correspondingly, the PCF network element receives the quality of service notification information in the first direction.

Specifically, the quality of service notification information that is in the first direction and that is sent by the SMF network element to the PCF network element in step S505 is the same as the quality of service notification information that is in the first direction and that is received by the SMF network element from the AN device in step S504, where the quality of service notification information in the first direction notifies that the quality of service of the first service flow in the first direction does not meet the first target quality of service or re-meets the first target quality of service, to indicate the PCF network element to adjust the quality of service parameter/attribute of the service flow in the first direction, that is, the quality of service parameter of the quality of service.

Optionally, the quality of service parameter/attribute may include but is not limited to one or more of the following: a priority level, a packet delay budget, a maximum data burst volume, a quality of service identifier, and notification control information.

It should be noted that step S505 corresponds to step S405, and mutual reference may be made between step S505 and step S405.

S506: The PCF network element updates the first PCC rule based on the quality of service notification information in the first direction, to obtain a second PCC rule.

Specifically, after receiving the quality of service notification information in the first direction, the PCF network element updates or adjusts the quality of service parameter/attribute of the service flow in the first direction, to obtain an updated quality of service parameter/attribute of the service flow in the first direction. A manner in which the PCF network element updates or adjusts the quality of service parameter/attribute of the service flow in this direction is not specifically limited in this application.

It should be noted that, after the PCF network element receives the quality of service notification information in the first direction from the SMF network element, further, the PCF network element may send the quality of service notification information in the first direction to an AF network element.

S507: The PCF network element sends the second PCC rule to the SMF network element, where the second PCC rule includes the first direction and the updated quality of service parameter/attribute of the service flow in the first direction.

It should be noted that step S507 corresponds to step S406, and mutual reference may be made between step S507 and step S406.

S508: The SMF network element binds the second PCC rule to a second service flow.

Specifically, after receiving the second PCC rule, the SMF network element determines whether the second service flow has existed in the SMF, where direction information of the second service flow is the same as the direction information included in the second PCC rule, and a quality of service parameter/attribute of the second service flow is the same as the updated quality of service parameter/attribute that is of the service flow in the first direction and that is included in the second PCC rule.

If the second service flow has existed in the SMF network element, the SMF network element binds the second PCC rule to the second service flow, where the bound second PCC rule corresponds to the second service flow.

If the second service flow does not exist in the SMF network element, the SMF network element creates the second service flow, and binds the second PCC rule to the second service flow. In addition, the SMF network element further sends a second message to the AN device, where the second message includes identification information of the second service flow created by the SMF network element and a direction corresponding to the second service flow.

It should be noted that the second service flow is different from the first service flow in step S502.

It should be noted that step S508 corresponds to the binding process in step S406, and mutual reference may be made between step S508 and the binding process in step S406.

S509: The SMF network element sends the first direction and the updated quality of service parameter/attribute of the service flow in the first direction to the AN device.

Correspondingly, the AN device receives the first direction and the updated quality of service parameter/attribute of the service flow in the first direction.

Optionally, the SMF network element may include the first direction and the updated quality of service parameter/attribute of the service flow in the first direction in a second quality of service file, for example, a QoS profile, and send the second quality of service file to the AN device.

It should be noted that step S509 corresponds to step S407, and mutual reference may be made between step S509 and step S407.

S510: The SMF network element sends the information about the first direction and the updated QoS parameter/attribute in the first direction to the UE.

Optionally, the SMF may include the information about the first direction and the updated QoS parameter/attribute in the first direction in the rule of the quality of service in the first direction, and send the rule to the UE.

It should be understood that the SMF network element may perform step S509 and step S510 at the same time, or may perform step S509 and step S510 at different time. This is not specifically limited in this application.

It should be noted that, because the PCF network element may not independently adjust a quality of service parameter/attribute value of a service flow in a direction based on only the QNC, step S507 to step S510 may alternatively be performed separately from step S501 to step S506, that is, S507 to S510 may be performed as an independent example.

In conclusion, in the embodiment shown in FIG. 5, the network side may send information about the uplink direction and/or downlink direction and the quality of service notification control information to the access network device. The access network device may detect current quality of service of a service flow. If the access network device determines that the quality of service of the service flow in a direction does not meet target quality of service in the corresponding direction, the access network device may send quality of service notification information in the direction to the SMF network element. The SMF network element further sends the quality of service notification information in the direction to the PCF, so that the PCF network element side can adjust a quality of service parameter/attribute of the service flow in the direction. Therefore, in this solution, it can be ensured that the quality of service of the service flow used by the network can meet the corresponding target quality of service, and signaling overheads in a process of processing the quality of service parameter/attribute of the service flow can be reduced.

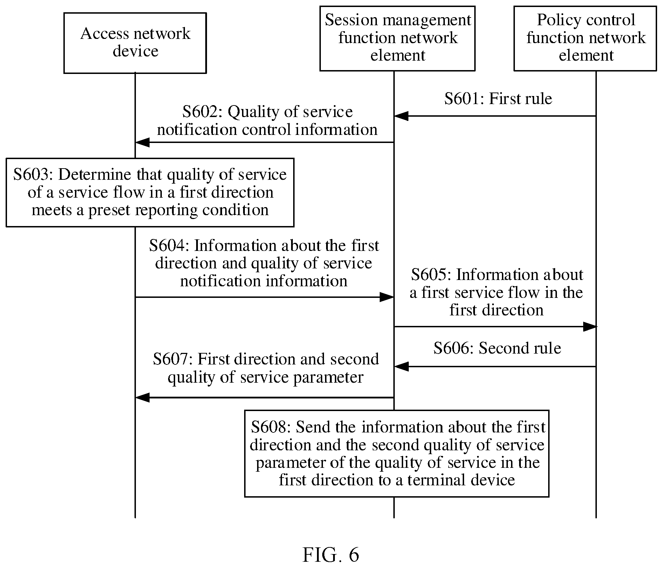

FIG. 6 is a flowchart of another specific implementation method according to an embodiment of this application. Specifically, the method may include the following steps.

S601: A session management network element receives a first rule from a policy control network element.

Specifically, the first rule includes quality of service notification control information, for example, QNC, where the quality of service notification control information indicates to send notification information to the policy control network element when quality of service of a service flow in an uplink direction or a downlink direction meets a preset reporting condition.

Optionally, the preset reporting condition includes: Current quality of service parameters in the uplink direction and the downlink direction of the service flow are different, and quality of service in a first direction does not meet or re-meets target quality in the direction.

It should be noted that the first rule includes only the quality of service notification control information, and does not include direction information.

S602: The session management network element sends the quality of service notification control information to an access network device.

Correspondingly, the access network device receives the quality of service notification control information.

For step S602, refer to step S402, and details are not described herein again.

It should be noted that the session management network element sends only the quality of service notification control information to the access network device, and does not send the direction information.

Optionally, before the session management network element sends the quality of service notification control information to an access network device, the method further includes: The session management network element binds the first rule to a first service flow based on the quality of service notification control information. For a specific binding manner, refer to step S402, and details are not described herein again.

S603: The access network device determines that quality of service of a service flow in the first direction meets the preset reporting condition, where the first direction is the uplink direction or the downlink direction.

Specifically, after receiving the quality of service notification control information, the access network device performs the following step S604 when determining that the current quality of service parameters in the uplink direction and the downlink direction of the service flow are different, and determining that the quality of service in the first direction does not meet or re-meets the target quality in the direction.

S604: The access network device sends information about the first direction and quality of service notification information to the session management network element, where the quality of service notification information indicates that the quality of service of the service flow in the first direction does not meet or re-meets the target quality in the direction.

S605: The session management network element sends notification information of the service flow in the first direction to the policy control network element.

For step S605, refer to step S405, and details are not described herein again.

S606: The session management network element receives a second rule from the policy control network element.

For step S606, refer to step S406, and details are not described herein again.

S607: The session management network element sends the information about the first direction and a second quality of service parameter of the quality of service in the first direction to the access network device.

For step S607, refer to step S407, and details are not described herein again.

S608: The session management network element sends the information about the first direction and the second quality of service parameter of the quality of service in the first direction to a terminal device.

It should be understood that step S607 and step S608 may be performed at the same time, or may be performed at different time. This is not specifically limited in this application.

It should be noted that, because the PCF network element may independently adjust a parameter/an attribute value in a direction without using QNC, step S606 to step S608 may alternatively be performed separately from step S601 to step S605, that is, step S606 to step S608 may be performed independently.

In conclusion, in the another specific implementation method shown in FIG. 6, the session management network element receives the first rule from the policy control network element, and then sends, to the access network device, the quality of service notification control information included in the first rule, where the quality of service notification control information indicates to send the notification information to the policy control network element when quality of service of the first service flow does not meet first target quality of service or re-meets first target quality of service. When the access network device detects that the current service flow in the uplink direction is asymmetrical with the current service flow in the downlink direction, and the quality of service of the service flow in the first direction does not meet or re-meets the target quality in the direction, the access network device sends the quality of service notification information in the first direction and the first direction to the session management network element. After receiving the quality of service notification information in the first direction and the first direction, the session management network element sends the information about the first service flow in the first direction to the policy control network element, so that the policy control network element can accurately process the first service flow in the first direction. In this way, the quality of service of the first service flow in the first direction can meet the first target quality of service.

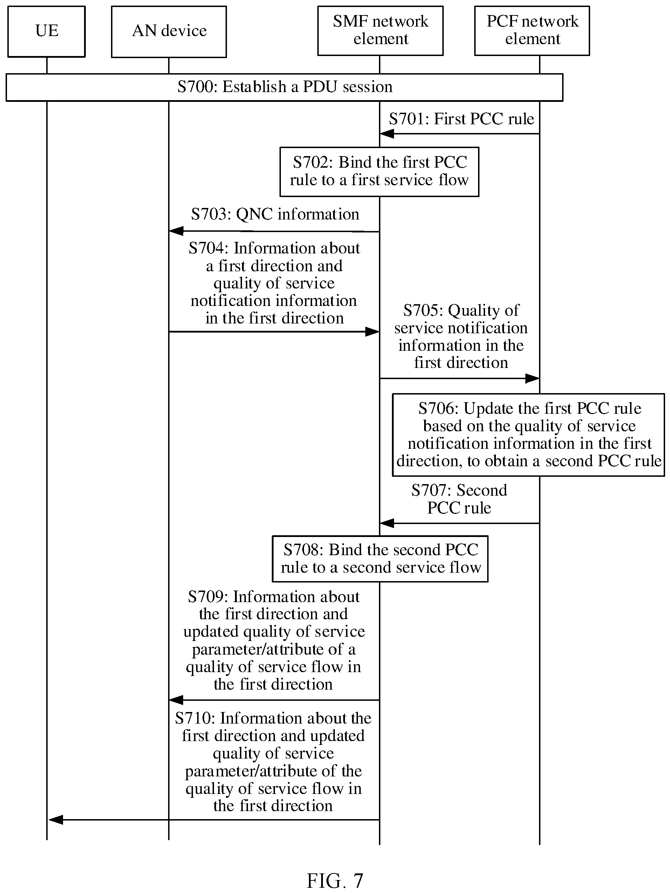

According to the another specific implementation method provided in the foregoing embodiment, the following describes the method in this application in detail with reference to a specific embodiment. Refer to FIG. 7. An execution object on a network side in this embodiment is a network element. A PCF network element in this embodiment is the policy control network element in FIG. 6, an SMF network element in this embodiment is the session management network element in FIG. 6, and an AN device in this embodiment is the access network device in FIG. 6. A specific implementation procedure of this embodiment is as follows.

S700: UE establishes a PDU session with the network side.

The UE establishes the PDU session with the network side. For details, refer to a conventional technical solution. Details are not described in this application.

It should be understood that the network side mainly includes but is not limited to the access network device, the SMF network element, and the PCF network element.

S701: The PCF network element sends a first PCC rule to the SMF network element, where the first PCC rule includes QNC information, and the QNC information indicates to perform reporting when quality of service of a service flow does not meet or re-meets corresponding target quality of service.

It should be noted that step S701 corresponds to step S601, and mutual reference may be made between step S701 and step S601.

S702: The SMF network element binds the first PCC rule to a first service flow.

Specifically, after receiving the first PCC rule, the SMF network element determines whether the first service flow has existed in the SMF network element, where QNC information of the first service flow is the same as the QNC information included in the first PCC rule, and another parameter of the first service flow also needs to be the same as a corresponding parameter included in the first PCC rule. A parameter type is not specifically limited in this application.

If the first service flow has existed in the SMF network element, the SMF network element binds the first PCC rule to the first service flow. If the first service flow does not exist in the SMF network element, the SMF network element creates the first service flow, binds the first PCC rule to the first service flow, and sends a first message to the AN device, where the first message includes identification information of the first service flow created by the SMF network element and a direction corresponding to the identification information of the first service flow.

It should be understood that the quality of service QNC information and the another parameter that are of the first service flow created by the SMF network element are the same as the quality of service notification control QNC information and the another parameter that are included in the first PCC rule.

It should be noted that step S702 corresponds to the binding process in step S602, and mutual reference may be made between step S702 and the binding process in step S602.

S703: The SMF network element sends the QNC information to the AN device.

Correspondingly, the AN device receives the QNC information.

Optionally, the SMF network element may include the QNC information in a first quality of service file, for example, a QoS profile, and send the first quality of service file to the AN device.

It should be understood that the QNC information sent by the SMF network element to the AN device is the same as the QNC information in the first PCC rule.

It should be noted that step S703 corresponds to step S602, and mutual reference may be made between step S703 and step S602.

S704: The AN device sends information about a first direction and quality of service notification information in the first direction to the SMF network element.

Correspondingly, the SMF network element receives the information about the first direction and the quality of service notification information in the first direction.

Optionally, the AN device may include the information about the first direction and the quality of service notification information in the first direction in N2 signaling, and send the N2 signaling to the SMF network element.

Specifically, after receiving the QNC information, when the AN device determines that a current quality of service parameter/attribute value in an uplink direction is different from a current quality of service parameter/attribute value in a downlink direction, and quality of service of a service flow in the first direction does not meet or re-meets target quality of service in the direction, where the first direction may be the uplink direction or the downlink direction, the AN device may send the information about the first direction and the quality of service notification information in the first direction to the SMF network element based on the quality of service notification control QNC information.

It should be understood that, because the SMF network element cannot determine direction information, when the AN device determines that the quality of service of the service flow in the uplink direction or the downlink direction does not meet or re-meets the target quality of service in the corresponding direction, and when the AN device sends the quality of service notification information to the SMF network, the corresponding direction information further needs to be sent, so that the SMF network element can determine, based on the quality of service notification information and the corresponding direction information, a specific direction whose quality of service parameter/attribute of a service flow needs to be adjusted, and then report quality of service notification information in the direction to the PCF network element for execution.

Optionally, the quality of service parameter/attribute may include but is not limited to one or more of the following: a priority level, a packet delay budget, a maximum data burst volume, a quality of service identifier, and notification control information.

It should be noted that step S704 corresponds to step S603 and step S604, and mutual reference may be made between step S704, step S603, and step S604.

S705: The SMF network element sends the quality of service notification information in the first direction to the PCF network element.

It should be noted that step S705 corresponds to step S605, and mutual reference may be made between step S705 and step S605.

S706: The PCF network element updates the first PCC rule based on the quality of service notification information in the first direction, to obtain a second PCC rule.

Specifically, after receiving the quality of service notification information in the first direction, the PCF network element determines a quality of service parameter/attribute of the service flow in the first direction based on the information about the first direction included in the information, and then updates or adjusts the quality of service QoS parameter/attribute, to obtain an updated quality of service parameter/attribute of the service flow in the first direction.

It should be noted that, after the PCF network element receives the quality of service notification information that is in the first direction and that is reported by the SMF network element, the PCF network element may further report the information to an AF network element.

S707: The PCF network element sends the second PCC rule to the SMF network element, where the second PCC rule includes the information about the first direction and the updated quality of service parameter/attribute of the service flow in the first direction.

Correspondingly, the SMF network element receives the second PCC rule.

It should be noted that step S707 corresponds to step S606, and mutual reference may be made between step S707 and step S606.

S708: The SMF network element binds the second PCC rule to a second service flow.

Step S708 corresponds to the binding process in step S607, and mutual reference may be made between step S708 and the binding process in step S607.

S709: The SMF network element sends the information about the first direction and the updated quality of service parameter/attribute of the service flow in the first direction to the AN device.

It should be noted that step S709 corresponds to step S607, and mutual reference may be made between step S709 and step S607.

S710: The SMF network element sends the information about the first direction and the updated quality of service parameter/attribute of the service flow in the first direction to the UE.

It should be noted that step S710 corresponds to step S608, and mutual reference may be made between step S710 and step S608.

It should be understood that the SMF network element may perform step S709 and step S710 at the same time, or may perform step S709 and step S710 at different time. This is not specifically limited in this application.

It should be noted that, because the PCF network element may not independently adjust a parameter/an attribute value in a direction based on only the QNC, step S707 to step S710 may alternatively be performed separately from step S701 to step S706, that is, S707 to S710 may be performed as an independent example.

In conclusion, in the implementation shown in FIG. 7, after receiving the QNC information sent by the network side, when determining that the current quality of service parameter/attribute values in the uplink direction and the downlink direction of the service flow are different, and the quality of service of the service flow in the first direction does not meet the target quality of service in the corresponding direction, the AN device needs to send the information about the first direction and the quality of service notification information to the SMF network element, and the SMF network element further sends the information about the first direction and the quality of service notification information to the PCF network element, so that the PCF can know a direction whose quality of service parameter/attribute of a service flow needs to be adjusted, and then perform the adjustment. Therefore, in this solution, the quality of service of the service flow used by the network can meet the corresponding target quality of service, and signaling overheads in a process of processing the quality of service parameter/attribute of the service flow can be reduced.

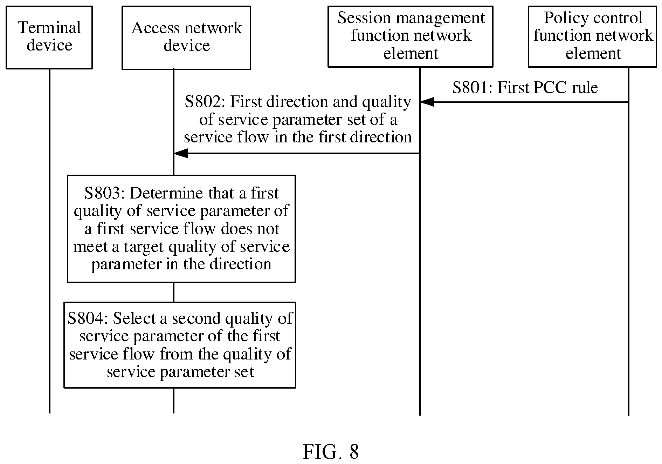

FIG. 8 is a flowchart of still another specific implementation method according to an embodiment of this application. Specifically, the method may include the following steps.

S801: A session management network element receives a first rule from a policy control network element.

In an implementation, before a session management network element receives a first rule from a policy control network element, the method further includes: The policy control network element receives requirement information of a service flow from an application function network element, where the requirement information indicates the policy control network element to send the first rule to the session management network element.

Specifically, the first rule includes direction information and a quality of service parameter set of the service flow, where the direction information includes an uplink direction and/or a downlink direction, the quality of service parameter set of the service flow includes a first quality of service parameter set and/or a second quality of service parameter set, the first quality of service parameter set includes a quality of service parameter in the uplink direction, and the second quality of service parameter set includes a quality of service parameter in the downlink direction. For example, the quality of service parameter set of the service flow may be an alternative quality of service parameter (Alternative QoS Parameter, AQP).

In an implementation, one or more quality of service parameters in the first quality of service parameter set have priority levels, and one or more quality of service parameters in the second quality of service parameter set have priority levels.

For example, the quality of service parameter set of the service flow may be obtained in but is not limited to the following manners.

First, a plurality of obtained quality of service parameters are grouped into two quality of service parameter sets: the first quality of service parameter set and the second quality of service parameter set in two directions, that is, the uplink direction and the downlink direction, where the first quality of service parameter set includes the quality of service parameter in the uplink direction, and the second quality of service parameter set includes the quality of service parameter in the downlink direction. Second, for each quality of service parameter set, quality of service parameters of quality of service corresponding to different priority levels may be arranged in descending order or ascending order of the priority levels.

Refer to Table 1. A packet delay budget PDB and a guaranteed flow bit rate GFBR are used as examples of the quality of service parameters of the quality of service. Packet delay budgets PDBs and guaranteed flow bit rates GFBRs of different priority levels are grouped into two groups in the uplink direction and the downlink direction, that is, the first quality of service parameter set in the uplink direction and the second quality of service parameter set in the downlink direction, and each group is arranged in descending order of the priority levels, that is, a priority level of a number 1 is higher than a priority level of a number 2, a priority level of a number 2 is higher than a priority level of a number 3, and the rest may be deduced by analogy. During implementation, the priority level may alternatively be indicated based on an arrangement sequence, and there is no need to display a priority level value.

**Table 1**

| Priority level | First quality of service parameter set | Second quality of service parameter set |
|---|---|---|
| 1 | PDB 1 and GFBR 1 | PDB 3 and GFBR 3 |
| 2 | PDB 2 and GFBR 1 | PDB 4 and GFBR 4 |
| 3 | PDB 2 and GFBR 2 | PDB 5 and GFBR 5 |
| ... | ... | ... |

It should be noted that the policy control network element may obtain the quality of service parameter set of the service flow, and then include the quality of service parameter set of the service flow in the first rule, to send the first rule to the session management network element. Therefore, a specific network element that performs the grouping is not specifically limited in this application.

S802: The session management network element sends the direction information and the quality of service parameter set of the quality of service to an access network device.

Correspondingly, the access network device receives the direction information and the quality of service parameter set of the quality of service.

Optionally, before the session management network element sends the quality of service parameter set of the quality of service to an access network device, the method further includes: The session management network element binds the first rule to the service flow based on the direction information and the quality of service parameter set of the service flow.

Specifically, that the session management network element binds the first rule to the service flow based on the direction information and the quality of service parameter set of the service flow may include but is not limited to the following two implementations.

In a first implementation, when the session management network element determines that a first service flow exists in the session management network element, direction information of the first service flow is the same as information about the uplink direction in the direction information, and the first quality of service parameter set includes a quality of service parameter of the first service flow, the session management network element binds the first rule to the first service flow. Alternatively, when the session management network element determines that direction information of the first service flow is the same as information about the downlink direction in the first rule, and the second quality of service parameter set includes a quality of service parameter of the first service flow, the session management network element binds the first rule to the first service flow.

For example, the direction information of the first service flow is the same as the direction information in the first rule, and the two pieces of direction information are the information about the uplink direction, and the first quality of service parameter set includes the quality of service parameter of the first service flow.

In a second implementation, the session management network element creates the first service flow, where direction information of the first service flow is the same as information about the uplink direction in the direction information, and the first quality of service parameter set includes a quality of service parameter of the first service flow, and the session management network element binds the first rule to the first service flow. Alternatively, when direction information of the first service flow is the same as information about the downlink direction in the first rule, and the second quality of service parameter set includes a quality of service parameter of the first service flow, the session management network element binds the first rule to the first service flow.

In addition, the session management network element further sends a first message to the access network device, where the first message includes identification information of the first service flow created by the session management network element and a direction corresponding to the first service flow.

Certainly, during implementation, the session management network element may further bind the first rule including the quality of service parameter set of the quality of service to a separate service flow, that is, no other rule is bound to the service flow.

S803: The access network device determines that quality of service of the first service flow in a first direction does not meet target quality of service of the first service flow in the first direction, where the first direction includes the uplink direction and/or the downlink direction.

Specifically, when receiving the first service flow in the first direction, the access network device detects and determines that a first quality of service parameter of the first service flow in the first direction does not meet a target quality of service parameter of the first service flow in the first direction.

For example, the access network determines that a current flow bit rate in the uplink direction does not meet a guaranteed flow bit rate GFBR in the uplink direction.

S804: The access network device selects a second quality of service parameter from the quality of service parameter set, where the second quality of service parameter is an updated quality of service parameter of the first service flow in the first direction.

In an implementation, that the access network device selects the second quality of service parameter based on the first direction and the quality of service parameter set of the service flow specifically includes the following: First, the access network device selects, from the quality of service parameter set of the service flow, a quality of service parameter set whose direction is consistent with the first direction, and then the access network device selects, from the quality of service parameter set, a quality of service parameter with a highest priority level as the second quality of service parameter; or if the first quality of service parameter is one in the quality of service parameter set, the access network device selects, from the quality of service parameter set, one or more quality of service parameters whose priority levels are lower than that of the first quality of service parameter, and uses a quality of service parameter with a highest priority level in the one or more quality of service parameters as the second quality of service parameter.

It should be understood that the first quality of service parameter is a quality of service parameter that is obtained before update and that is of the service flow in the first direction.

For example, when the access network device determines that the current quality of service in the uplink direction does not meet or re-meets target quality of service in the uplink direction, refer to Table 1. The access network device may use a quality of service parameter with a highest priority level in the first quality of service parameter set as a current quality of service parameter of the service flow in the uplink direction. Alternatively, if a current quality of service parameter of the service flow in the uplink direction corresponds to a priority level 3, the access network device selects, from the first quality of service parameter set, one or more quality of service parameters whose priority levels are lower than 3, and then selects, from the one or more quality of service parameters whose priority levels are lower than 3, a quality of service parameter with a highest priority level as the current quality of service parameter of the service flow in the uplink direction.

Optionally, the foregoing related rule may be but is not limited to a PCC rule.

It should be understood that, before all the steps of quality of service processing are performed in this application, that is, before UE interacts with or communicates with a network side, the terminal has established a session connection, for example, a PDU session, to the network side.

After step S804 is performed, the access network device sends the updated second quality of service parameter of the quality of service in the first direction to the session management network element to modify the session, for example, modify the PDU session.

In conclusion, in the still another specific implementation method shown in FIG. 8, the access network device receives the quality of service parameter set of the service flow from the session management network element. When determining that the quality of service of the service flow in the first direction does not meet the target quality of service of the service flow in the first direction, the access network device may select the second quality of service parameter as the updated quality of service parameter of the service flow in the first direction based on the first direction and the quality of service parameter set of the service flow. In the method, when detecting that a service flow in a direction does not meet target quality of service of the service flow in the direction, the access network device may update a quality of service parameter of the service flow in the direction by itself, so that quality of service of the service flow in the direction meets a target requirement, and system overheads for processing the quality of service in the direction are reduced.

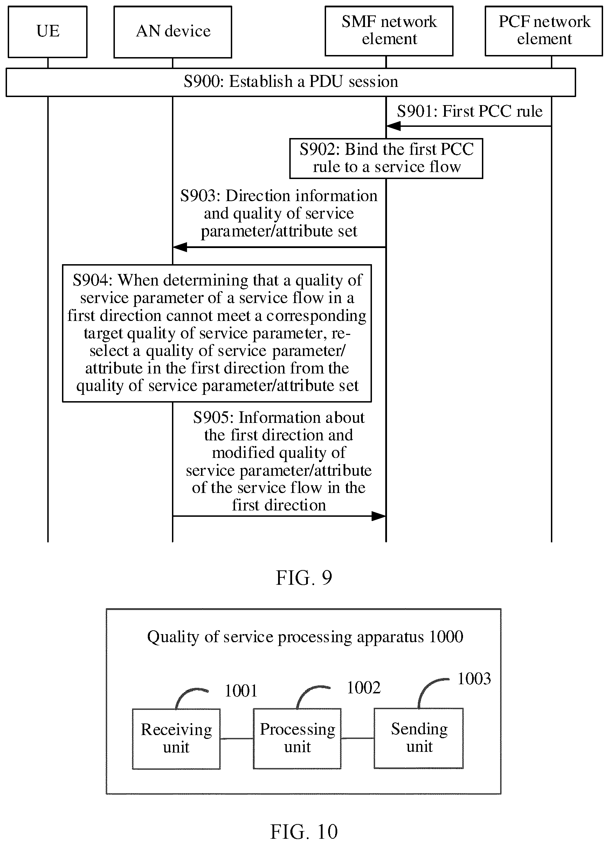

According to the specific implementation method provided in the foregoing embodiment, the following describes the method in this application in detail with reference to a specific embodiment. Refer to FIG. 9. An execution object on a network side in this embodiment is a network element. A PCF network element in this embodiment is the policy control network element in FIG. 8, an SMF network element in this embodiment is the session management network element in FIG. 8, and an AN device in this embodiment is the access network device in FIG. 8. A specific implementation procedure of this embodiment is as follows.

S900: UE establishes a PDU session with the network side.

The UE establishes the PDU session with the network side. For details, refer to a conventional technical solution. Details are not described in this application.

It should be understood that the network side mainly includes but is not limited to the access network device, the SMF network element, and the PCF network element.

S901: The PCF network element sends a first PCC rule to the SMF network element.

Specifically, the first PCC rule includes direction information and an AQP, that is, a quality of service parameter/attribute set. When step S901 is performed, when the first PCC rule includes the AQP, the quality of service parameter/attribute set of a service flow may be obtained in the following manner.

Quality of service parameters/attributes of corresponding service flows are grouped into two groups based on an uplink direction and a downlink direction, that is, a first set including quality of service parameters/attributes in the uplink direction and a second set including quality of service parameters/attributes in the downlink direction. In addition, each set is arranged in ascending order or descending order of priority level values of the service flows. For details, refer to Table 1 (where in ascending order, a smaller priority level value indicates a higher level). While during implementation, the priority level may alternatively be indicated based on an arrangement sequence, and there is no need to display the priority level value.

It should be noted that step S901 corresponds to step S801, and mutual reference may be made between step S901 and step S801.

In addition, during implementation, before step S901 is performed, the PCF network element may have performed the foregoing grouping for use in a subsequent step. The quality of service parameter/attribute includes but is not limited to the packet delay budget PDB and the guaranteed flow bit rate GFBR in Table 1. In addition, another quality of service parameter/attribute may further exist in the PCC rule in addition to the AQP. It is generally considered that a quality of service parameter/attribute other than the AQP is preferentially used, and the quality of service parameter/attribute in the AQP is used when the quality of service parameter/attribute other than the AQP cannot be met.

S902: The SMF network element binds the first PCC rule to the service flow.

Step S902 is an optional step. For details, refer to the binding process in step S802. Details are not described herein again.

S903: The SMF network element sends the direction information and the AQP to the AN device.

For example, the AQP is the quality of service parameter/attribute set.

Optionally, the SMF includes the direction information and the AQP in a first quality of service file, for example, a QoS profile or an alternative QoS profile, and sends the first quality of service file to the AN device. There may be a plurality of alternative QoS profiles.

It should be noted that step S903 corresponds to step S802, and mutual reference may be made between step S903 and step S802.

S904: When determining that quality of service of a service flow in a first direction cannot meet target quality of service in the corresponding direction, the AN device re-selects a quality of service parameter/attribute in the first direction based on the quality of service parameter/attribute set, where the first direction is the uplink direction or the downlink direction.

It should be noted that step S904 corresponds to step S803, and mutual reference may be made between step S904 and step S803.

Specifically, after receiving the direction information and the AQP, if the AN device determines that the quality of service of the service flow in the first direction cannot meet the target quality of service in the corresponding direction, first, the AN device determines, from the quality of service parameter/attribute set, a set whose direction is consistent with the first direction, and uses a quality of service parameter/attribute with a highest priority level in the set as the quality of service parameter/attribute of the service flow in the first direction, or the AN device selects, from the set, one or more quality of service parameters/attributes whose priority levels are higher than the quality of service parameter/attribute in the first direction, and then selects, from the one or more quality of service parameters/attributes, a quality of service parameter/attribute with a highest priority level as the quality of service parameter/attribute of the service flow in the first direction.

For example, when the AN device determines that a current GFBR 1 in the uplink direction cannot meet a target GFBR in the uplink direction, the AN device updates, in the first set corresponding to the uplink direction, the current GFBR 1 in the uplink direction to a GFBR with a highest priority level in the first set, or if a priority level corresponding to a current uplink GFBR 1 is 3, the AN device selects, from the first set, one or more GFBRs whose priority levels are lower than 3, and then updates the current GFBR 1 in the uplink direction to a GFBR with a highest priority level in the one or more GFBRs.

According to step S904, if the AN device determines that the quality of service of the service flow in the first direction still cannot meet the target quality of service in the corresponding direction, the AN device may continue to perform adjustment or modification with reference to step S904. Therefore, it can be finally ensured that the current quality of service of the service flow in the first direction meets the target quality of service in the corresponding direction.

In a specific implementation method, if the AN device determines that the quality of service of the service flow in the first direction cannot meet a quality of service configuration file requirement, when the GFBR is used as an example, the AN device should send, to the SMF network element, a notification that "the GFBR in the first direction can no longer be guaranteed". Before sending, to the SMF network element, the notification that "the GFBR in the first direction can no longer be guaranteed", the AN device should check (based on a priority level sequence in the first direction) whether a corresponding GFBR that can be met exists in the alternative QoS profile. If the GFBR exists, the AN device should indicate to use an alternative QoS configuration file with a highest priority level, and notify the SMF network element. If the GFBR does not exist, the AN device sends, to the SMF network element, a notification that "the GFBR in the first direction can no longer be guaranteed", to indicate that an alternative QoS profile with a lowest priority level cannot be met (unless a specific condition on an access network side requires to release an access network resource QoS flow for this purpose, for example, due to a radio link fault or internal congestion).

If the AN device has sent, to the SMF network element, the notification that "the GFBR in the first direction can no longer be guaranteed", and the AN device determines that a QoS requirement currently met in the direction, for example, a GFBR, a PDB, or a PER, is different from a situation indicated in a previous notification, that is, the situation becomes better or worse, the AN device should send a notification to the SMF network element, that is, "the GFBR in the first direction can be re-guaranteed" or "the GFBR in the first direction can no longer be guaranteed", to indicate a current situation, unless a specific condition on an access network side requires to release an access network resource QoS flow for this purpose, for example, due to a radio link fault or internal congestion.

The AN device should always try to meet the quality of service configuration file, for example, the QoS profile. If it is impossible, the AN device uses an alternative quality of service configuration file with a higher priority level in the alternative QoS profile, that is, replaces the current quality of service parameter/attribute with a quality of service parameter/attribute with a higher priority level in the current direction from the AQP.

S905: The AN device sends information about the first direction and the modified quality of service parameter/attribute of the service flow in the first direction to the SMF network element, to modify the PDU session. The SMF network element may further notify the PCF network element. If the PCF network element does not have another indication, the SMF network element updates the quality of service parameter/attribute on the UE. It should be noted that step S905 is an optional step.

In conclusion, in the embodiment shown in FIG. 9, the PCF network element sends the first set of quality of service parameters/attributes in the uplink direction and/or the second set of quality of service parameters/attributes in the downlink direction to the AN device via the SMF network element. After obtaining the first set or the second set, when determining that the quality of service in the first direction does not meet the target quality of service in the corresponding direction, the AN device may use, based on the priority level, a quality of service parameter/attribute corresponding to another priority level in the first set or the second set as the current quality of service parameter/attribute in the direction. Therefore, the current quality of service in the first direction can be adjusted, so that the current quality of service in the first direction reaches the corresponding target quality of service as much as possible. In addition, in this embodiment of this application, because the quality of service attributes/parameters are grouped based on the direction information. In comparison with a manner in which directions are not distinguished between, in this application, the AN device can more efficiently adjust the current quality of service attribute/parameter in the direction.

Based on a same technical concept, an embodiment of this application provides a quality of service processing apparatus. The apparatus may include a one-to-one corresponding module or unit for performing the method/operation/step/action described by using the session management network element in the first method embodiment. The module or unit may be implemented by a hardware circuit, implemented by software, or implemented by a hardware circuit in combination with software. The apparatus may have a structure as shown in FIG. 10.

As shown in FIG. 10, the quality of service processing apparatus 1000 may include a receiving unit 1001, a processing unit 1002, and a sending unit 1003. The following describes the units in detail. The receiving unit 1001 is configured to receive a first rule from a policy control network element, where the first rule includes direction information and quality of service notification control information, the direction information indicates a direction of a first service flow, the direction information includes an uplink direction and/or a downlink direction, and the quality of service notification control information indicates to send notification information to a policy control network element when quality of service of the first service flow meets a preset reporting condition. The sending unit 1003 is configured to send the direction information and the notification control information to an access network device. The receiving unit 1001 is configured to receive quality of service notification information in a first direction from the access network device, where the quality of service notification information in the first direction notifies that the quality of service of the first service flow in the first direction meets the preset reporting condition, and the first direction includes at least one direction in the direction information. The sending unit 1003 is configured to send the first direction and information about the first service flow to the policy control network element.

In a possible implementation, the preset reporting condition includes: The quality of service of the first service flow does not meet or re-meets target quality of service in a corresponding direction.

In a possible implementation, the processing unit 1002 may be configured to bind the first rule to the first service flow.

In a possible implementation, when the processing unit 1002 binds the first rule to the first service flow, the processing unit 1002 may be specifically configured to bind the first rule to the existing first service flow, where the bound first rule corresponds to the first service flow, direction information of the first service flow is the same as the direction information in the first rule, and quality of service notification control information of the first service flow is the same as the quality of service notification control information in the first rule.

In a possible implementation, when the processing unit 1002 binds the first rule to the service flow, the processing unit 1002 may be specifically configured to: create the first service flow, where direction information of the first service flow is the same as the direction information in the first rule, and quality of service notification control information of the first service flow is the same as the quality of service notification control information in the first rule, and bind the first rule to the first service flow, where the bound first rule corresponds to the first service flow.

In a possible implementation, the sending unit 1003 is further configured to send a first message to the access network device, where the first message includes identification information of the first service flow and the direction corresponding to the first service flow.

In a possible implementation, the quality of service notification information in the first direction includes the first direction and the information about the first service flow.

In a possible implementation, the receiving unit 1001 is further configured to receive a second rule from the policy control network element, where the second rule includes the first direction and a second quality of service parameter of a service flow in the first direction, and the second quality of service parameter indicates updated quality of service of the service flow in the first direction. The sending unit 1003 is further configured to send the first direction and the second quality of service parameter to the access network device.

In a possible implementation, the sending unit 1003 is further configured to send the first direction and the second quality of service parameter of the service flow in the first direction to a terminal device.

In a possible implementation, the processing unit 1002 may be further configured to bind the second rule to a second service flow.

In a possible implementation, when the processing unit 1002 binds the second rule to the second service flow, the processing unit 1002 may be specifically configured to: when the second service flow is a currently existing service flow, determine that a direction of the second service flow is the first direction, and a quality of service parameter of the second service flow is the same as the second quality of service parameter in the second rule, and bind the second rule to the second service flow, where the bound second rule corresponds to the second service flow.

In a possible implementation, when the processing unit 1002 binds the second rule to the second service flow, the processing unit 1002 may be specifically configured to: create the second service flow, where a direction of the second service flow is the first direction, and a quality of service parameter of the second service flow is the same as the second quality of service parameter in the second rule, and bind the second rule to the second service flow, where the bound second rule corresponds to the second service flow.

In a possible implementation, the sending unit 1003 is further configured to send a second message to the access network device, where the second message includes identification information of the second service flow and the direction corresponding to the second service flow.

In a possible implementation, the quality of service parameter includes one or more of the following: a priority level, a packet delay budget, a maximum data burst volume, a quality of service identifier, and notification control information.

Based on a same technical concept, an embodiment of this application provides a quality of service processing apparatus. The apparatus may include a one-to-one corresponding module or unit for performing the method/operation/step/action described by using the access network device in the foregoing method embodiment. The module or unit may be implemented by a hardware circuit, implemented by software, or implemented by a hardware circuit in combination with software. The apparatus may also have a structure shown in FIG. 10. That is, the access network device may also include a receiving unit 1001, a processing unit 1002, and a sending unit 1003.

The receiving unit 1001 is configured to receive a quality of service parameter set of a service flow in a first direction from a session management network element, where the first direction includes an uplink direction and/or a downlink direction, and is further configured to receive a first service flow in the first direction.

The processing unit 1002 is configured to determine that a first quality of service parameter of the first service flow does not meet a target quality of service parameter in the direction. The processing unit 1002 may be further configured to select a second quality of service parameter of the first service flow from the quality of service parameter set, where the second quality of service parameter is an updated quality of service parameter of the first service flow.

In a possible implementation, one or more quality of service parameters in the quality of service parameter set have priority levels.

In a possible implementation, when the access network device selects the second quality of service parameter of the first service flow from the quality of service parameter set, the processing unit 1002 is specifically configured to: select, from the quality of service parameter set, a quality of service parameter with a highest priority level as the second quality of service parameter; or select, from the quality of service parameter set, one or more quality of service parameters whose priority levels are lower than that of the first quality of service parameter, and use a quality of service parameter with a highest priority level in the one or more quality of service parameters as the second quality of service parameter.

In a possible implementation, the sending unit 1003 may be further configured to send the first direction and the second quality of service parameter of the service flow in the first direction to the session management network element.

In a possible implementation, the quality of service parameter includes one or more of the following: the priority level, a packet delay budget, a maximum data burst volume, a quality of service identifier, and notification control information.

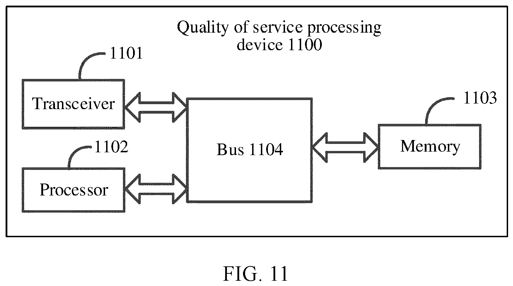

Based on a same invention concept, an embodiment of this application further provides a quality of service processing device. The quality of service processing device uses steps performed by the session management network element in the methods provided in embodiments corresponding to FIG. 4 to FIG. 9, and may be a device that is the same as the quality of service processing apparatus 1000 shown in FIG. 10. Refer to FIG. 11. The quality of service processing device 1100 includes a transceiver 1101, a processor 1102, and a memory 1103. The transceiver 1101 and the processor 1102 are connected to the memory 1103 through a bus 1104, to implement data exchange.

It should be understood that the transceiver 1101 in the quality of service processing device 1100 includes functions of the sending unit 1003 and the receiving unit 1001 in the foregoing quality of service processing apparatus 1000. The transceiver 1101 is configured to support sending and receiving of information, data, and the like between the quality of service processing apparatus 1100 and the access network device and the policy control network element in the foregoing embodiments. The memory 1103 is configured to store program code and data of the quality of service processing apparatus 1100. The processor 1102 is configured to invoke the program code and the data stored in the memory 1103, to perform processing processes of the session management network element in the methods shown in FIG. 4 to FIG. 9 and/or another process of the technology described in this application.

In addition, the quality of service processing apparatus 1100 may further include another interface, for example, an optical fiber link interface, an Ethernet interface, a microwave link interface, or a copper line interface, to implement interaction between the quality of service processing apparatus 1100 and another device (for example, the access network device or the policy control network element).

Optionally, the processor 1102 may be a central processing unit, an ASIC, an FPGA, or a CPLD.

It should be noted that the quality of service processing apparatus 1100 shown in FIG. 11 includes only one transceiver 1101, one processor 1102, and one memory 1103. During actual implementation, there may be one or more transceivers 1101, processors 1102, and memories 1103.

Similarly, it should be noted that the quality of service processing apparatus 1100 shown in FIG. 11 may also implement the methods performed by the access network device in the methods provided in embodiments corresponding to FIG. 4 to FIG. 9, and may also be a device that is the same as the quality of service processing apparatus 1000 shown in FIG. 10. Therefore, for an implementation that is not described in detail and that is of the quality of service processing apparatus 1100, refer to the related descriptions in the methods provided in embodiments corresponding to FIG. 4 to FIG. 9 or the related descriptions in the quality of service processing apparatus 1000 shown in FIG. 10.

Based on a same concept as that in the foregoing method embodiment, an embodiment of this application further provides a computer-readable storage medium. The computer-readable storage medium stores some instructions. When the instructions are invoked and executed by a computer, the computer may be enabled to complete the method in any one of the foregoing method embodiment or the possible designs of the method embodiment. The computer-readable storage medium is not limited in this embodiment of this application. For example, the computer-readable storage medium may be a RAM (random-access memory, random-access memory) or a ROM (read-only memory, read-only memory).

Based on a same concept as that in the foregoing method embodiment, this application further provides a computer program product. When the computer program product is invoked and executed by a computer, the method in any one of the foregoing method embodiment and the possible designs of the method embodiment may be completed.

Based on a same concept as that in the foregoing method embodiment, this application further provides a chip. The chip may include a processor and an interface circuit, to complete the method in any one of the foregoing method embodiment and the possible implementations of the method embodiment. "Coupling" means that two components are directly or indirectly combined with each other. The combination may be fixed or movable, and the combination may allow communication of flowing liquid, electricity, an electrical signal, or another type of signal between the two components.

It should be noted that at least one in embodiments of this application includes one or more, and a plurality of means two or more. In addition, it should be understood that in the descriptions of this application, terms such as "first" and "second" are merely for distinguishing and description, but should not be understood as indicating or implying relative importance, or should not be understood as indicating or implying a sequence.

Terms used in the following embodiments are merely intended to describe specific embodiments, but are not intended to limit this application. The terms "a", "the", "the foregoing", "this", and "the one" of singular forms used in this specification and the appended claims of this application are also intended to include forms such as "one or more", unless otherwise specified in the context clearly. It should also be understood that, in embodiments of this application, "one or more" means one or more than two (including two), and "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

An embodiment of this application provides a computer-readable storage medium, storing a computer program. The computer program includes instructions used to perform the foregoing method embodiments.

An embodiment of this application provides a computer program product including instructions. When the computer program product runs on a computer, the computer is enabled to perform the foregoing method embodiments.

Through the descriptions of the foregoing implementations, a person skilled in the art may clearly understand that embodiments of this application may be implemented by hardware, firmware or a combination thereof. When software is used to implement embodiments, the foregoing functions may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a computer. The following is used as an example but is not limited to: The computer-readable medium may include a RAM, a ROM, an electrically erasable programmable read-only memory (electrically erasable programmable read-only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and that is accessible to the computer. In addition, any connection may be properly defined as a computer-readable medium. For example, if software is transmitted from a website, a server, or another remote source through a coaxial cable, an optical fiber/cable, a twisted pair, a digital subscriber line (digital subscriber line, DSL), or wireless technologies such as infrared, radio, and microwave, the coaxial cable, the optical fiber/cable, the twisted pair, the DSL, or the wireless technologies such as infrared, radio, and microwave are included in fixation of a medium to which the coaxial cable, the optical fiber/cable, the twisted pair, the DSL, or the wireless technologies such as infrared, radio, and microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data in a magnetic manner, and the disc copies data optically in a laser manner. The foregoing combination shall also be included in the protection scope of the computer-readable medium.

In conclusion, the foregoing descriptions are merely embodiments of this application and are not intended to limit the protection scope of this application. Any modification, equivalent replacement, and improvement made based on the disclosure of this application shall fall within the protection scope of this application.

## Claims

1. A quality of service processing method, comprising:
receiving, by a session management network element, a first rule from a policy control network element, wherein the first rule comprises direction information and quality of service notification control information, the direction information indicates a direction of a first service flow, the direction information comprises an uplink direction and/or a downlink direction, and the quality of service notification control information indicates to send notification information to the policy control network element when quality of service of the first service flow meets a preset reporting condition;
sending, by the session management network element, the direction information and the notification control information to an access network device;
receiving, by the session management network element, quality of service notification information in a first direction from the access network device, wherein the quality of service notification information in the first direction notifies that the quality of service of the first service flow in the first direction meets the preset reporting condition, and the first direction comprises at least one direction in the direction information; and
sending, by the session management network element, the first direction and information about the first service flow to the policy control network element.

2. The method according to claim 1, wherein the preset reporting condition comprises: the quality of service of the first service flow does not meet target quality of service of the first service flow or meets target quality of service of the first service flow.

3. The method according to claim 1, wherein the method further comprises: binding, by the session management network element, the first rule to the first service flow.

4. The method according to claim 3, wherein the binding, by the session management network element, the first rule to the first service flow comprises:
binding, by the session management network element, the first rule to the first service flow, wherein the bound first rule corresponds to the first service flow, direction information of the first service flow is the same as the direction information in the first rule, and quality of service notification control information of the first service flow is the same as the quality of service notification control information in the first rule.

5. The method according to claim 3, wherein the binding, by the session management network element, the first rule to the service flow comprises:
creating, by the session management network element, the first service flow, wherein direction information of the first service flow is the same as the direction information in the first rule, and quality of service notification control information of the first service flow is the same as the quality of service notification control information in the first rule; and
binding, by the session management network element, the first rule to the first service flow, wherein the bound first rule corresponds to the first service flow.

6. The method according to claim 5, wherein the method further comprises: sending, by the session management network element, a first message to the access network device, wherein the first message comprises identification information of the first service flow and the direction corresponding to the first service flow.

7. The method according to claim 1, wherein the quality of service notification information in the first direction comprises the first direction and the information about the first service flow.

8. The method according to any one of claims 1 to 7, wherein the method further comprises:
receiving, by the session management network element, a second rule from the policy control network element, wherein the second rule comprises the first direction and a second quality of service parameter of a service flow in the first direction, and the second quality of service parameter indicates updated quality of service of the service flow in the first direction; and
sending, by the session management network element, the first direction and the second quality of service parameter to the access network device.

9. The method according to claim 8, wherein the method further comprises: sending, by the session management network element, the first direction and the second quality of service parameter of the service flow in the first direction to a terminal device.

10. The method according to claim 8, further comprising: binding, by the session management network element, the second rule to a second service flow.

11. The method according to claim 10, wherein the binding, by the session management network element, the second rule to a second service flow comprises:
when the second service flow is a currently existing service flow, determining, by the session management network element, that a direction of the second service flow is the first direction, and a quality of service parameter of the second service flow is the same as the second quality of service parameter in the second rule;
binding, by the session management network element, the second rule to the second service flow, wherein the bound second rule corresponds to the second service flow.

12. The method according to claim 10, wherein the binding, by the session management network element, the second rule to a second service flow comprises:
creating, by the session management network element, the second service flow, wherein a direction of the second service flow is the first direction, and a quality of service parameter of the second service flow is the same as the second quality of service parameter in the second rule; and
binding, by the session management network element, the second rule to the second service flow, wherein the bound second rule corresponds to the second service flow.

13. The method according to claim 12, wherein the method further comprises: sending, by the session management network element, a second message to the access network device, wherein the second message comprises identification information of the second service flow and the direction corresponding to the second service flow.

14. The method according to any one of claims 8 to 13, wherein the quality of service parameter comprises one or more of the following: a priority level, a packet delay budget, a maximum data burst volume, a quality of service identifier, and notification control information.

15. The method according to any one of claims 1 to 14, further comprising:
receiving, by the access network device, the direction information and the quality of service notification control information from the session management network element; and
determining, by the access network device, that the quality of service of the first service flow in the first direction meets the preset reporting condition, and sending, by the access network device, the quality of service notification information in the first direction to the session management network element.

16. A quality of service processing method, comprising:
sending, by a policy control network element, a first rule to a session management network element, wherein the first rule comprises direction information and quality of service notification control information, the direction information indicates a direction of a first service flow, the direction information comprises an uplink direction and/or a downlink direction, and the quality of service notification control information indicates to send notification information to the policy control network element when quality of service of the first service flow meets a preset reporting condition; and
receiving, by the policy control network element, a first direction and information about the first service flow from the session management network element, wherein the first direction comprises at least one direction in the direction information.

17. The method according to claim 16, wherein the method further comprises:
updating, by the policy control network element, a first quality of service parameter of a service flow in the first direction, to obtain a second quality of service parameter, wherein the second quality of service parameter indicates current quality of service of the service flow in the first direction; and
sending, by the policy control network element, a second rule to the session management network element, wherein the second rule comprises the first direction and the second quality of service parameter of the service flow in the first direction.

18. The method according to claim 16, wherein the preset reporting condition comprises: the quality of service of the first service flow does not meet target quality of service of the first service flow or meets target quality of service of the first service flow.

19. The method according to any one of claims 16 to 18, wherein the quality of service parameter comprises one or more of the following: a priority level, a packet delay budget, a maximum data burst volume, a quality of service identifier, and notification control information.

20. A quality of service processing method, comprising:
receiving, by an access network device, a quality of service parameter set of a service flow in a first direction from a session management network element, wherein the first direction comprises an uplink direction and/or a downlink direction;
receiving, by the access network device, a first service flow in the first direction;
determining, by the access network device, that a first quality of service parameter of the first service flow does not meet a target quality of service parameter in the direction; and
selecting, by the access network device, a second quality of service parameter of the first service flow from the quality of service parameter set, wherein the second quality of service parameter is an updated quality of service parameter of the first service flow.

21. The method according to claim 20, wherein one or more quality of service parameters in the quality of service parameter set have priority levels.

22. The method according to claim 21, wherein the selecting, by the access network device, a second quality of service parameter of the first service flow from the quality of service parameter set comprises:
selecting, by the access network device from the quality of service parameter set, a quality of service parameter with a highest priority level as the second quality of service parameter; or
selecting, by the access network device from the quality of service parameter set, one or more quality of service parameters whose priority levels are lower than that of the first quality of service parameter, and using a quality of service parameter with a highest priority level in the one or more quality of service parameters as the second quality of service parameter.

23. The method according to any one of claims 20 to 22, wherein the method further comprises:
sending, by the access network device, the first direction and the second quality of service parameter of the service flow in the first direction to the session management network element.

24. The method according to any one of claims 20 to 23, wherein the quality of service parameter comprises one or more of the following: the priority level, a packet delay budget, a maximum data burst volume, a quality of service identifier, and notification control information.

25. A quality of service processing method, comprising:
receiving, by a session management network element, a quality of service parameter set of a service flow in a first direction from a policy control network element, wherein the first direction comprises an uplink direction and/or a downlink direction;
sending, by the session management network element, the quality of service parameter set to an access network device;
receiving, by the access network device, a first service flow in the first direction;
determining, by the access network device, that a first quality of service parameter of the first service flow does not meet a target quality of service parameter in the direction; and
selecting, by the access network device, a second quality of service parameter of the first service flow from the quality of service parameter set, wherein the second quality of service parameter is an updated quality of service parameter of the first service flow.

26. The method according to claim 25, wherein one or more quality of service parameters in the quality of service parameter set have priority levels.

27. The method according to claim 25, wherein the selecting, by the access network device, a second quality of service parameter of the first service flow from the quality of service parameter set comprises:
selecting, by the access network device from the quality of service parameter set, a quality of service parameter with a highest priority level as the second quality of service parameter; or
selecting, by the access network device from the quality of service parameter set, one or more quality of service parameters whose priority levels are lower than that of the first quality of service parameter, and using a quality of service parameter with a highest priority level in the one or more quality of service parameters as the second quality of service parameter.

28. The method according to claim 25 or 26, wherein the method further comprises:
receiving, by the session management network element, the first direction and the second quality of service parameter of the service flow in the first direction from the access network device.

29. The method according to any one of claims 25 to 28, wherein the quality of service parameter comprises one or more of the following: the priority level, a packet delay budget, a maximum data burst volume, a quality of service identifier, and notification control information.

30. A quality of service processing method, comprising:
determining, by a policy control network element, a first rule, wherein the first rule comprises a quality of service parameter set of a service flow in a first direction, and the first direction comprises an uplink direction and/or a downlink direction; and
sending, by the policy control network element, the first rule to a session management network element.

31. The method according to claim 30, wherein one or more quality of service parameters in the quality of service parameter set have priority levels.

32. The method according to claim 30 or 31, wherein the quality of service parameter comprises one or more of the following: the priority level, a packet delay budget, a maximum data burst volume, a quality of service identifier, and notification control information.

33. A quality of service processing apparatus, comprising a processor, wherein
the processor is configured to: read a program from a memory and run the program, to implement the method according to any one of claims 1 to 14, 16 to 19, 20 to 24, or 30 to 32.

34. A communication system, comprising a policy control network element and a session management network element, wherein
the session management network element is configured to perform the method according to any one of claims 1 to 14; and
the policy control network element is configured to perform the method according to any one of claims 16 to 19.

35. The system according to claim 34, wherein the system further comprises an access network device, and the access network device is configured to perform the method according to claim 15.

36. A communication system, comprising a policy control network element, a session management network element, and an access network device, wherein
the access network device is configured to perform the method according to any one of claims 20 to 24;
the policy control network element is configured to perform the method according to any one of claims 30 to 32;
the session management network element receives a quality of service parameter set of a service flow in a first direction from the policy control network element, wherein the first direction comprises an uplink direction and/or a downlink direction; and
the session management network element is configured to send the quality of service parameter set of the service flow in the first direction to the access network device.

37. A computer storage medium, wherein the storage medium stores a software program, and when the software program is read and executed by one or more processors, the method according to any one of claims 1 to 32 can be implemented.

38. A computer program product comprising instructions, wherein when the computer program product runs on a computer, the method according to any one of claims 1 to 32 is performed.

39. A chip, comprising a processor, wherein the processor is connected to a memory, and is configured to execute a software program stored in the memory, to implement the method according to any one of claims 1 to 32.

40. A quality of service processing method, comprising:
sending, by a policy control network element, a first rule to a session management network element, wherein the first rule comprises direction information and quality of service notification control information, the direction information indicates a direction of a first service flow, the direction information comprises an uplink direction and/or a downlink direction, and the quality of service notification control information indicates to send notification information to the policy control network element when quality of service of the first service flow meets a preset reporting condition;
sending, by the session management network element, the direction information and the notification control information to an access network device;
receiving, by the session management network element, quality of service notification information in a first direction from the access network device, wherein the quality of service notification information in the first direction notifies that the quality of service of the first service flow in the first direction meets the preset reporting condition, and the first direction comprises at least one direction in the direction information; and
sending, by the session management network element, the first direction and information about the first service flow to the policy control network element.

41. The method according to claim 40, wherein the method further comprises:
updating, by the policy control network element, a first quality of service parameter of a service flow in the first direction, to obtain a second quality of service parameter, wherein the second quality of service parameter indicates current quality of service of the service flow in the first direction; and
sending, by the policy control network element, a second rule to the session management network element, wherein the second rule comprises the first direction and the second quality of service parameter of the service flow in the first direction.
